# EUROPEAN PATENT APPLICATION

(11) **EP 4 318 718 A1**
(43) Date of publication of application: **07.02.2024**
(21) Application number: 22779390.8
(22) Date of filing: 18.01.2022
(51) Int. Cl.: H01M 10/0569, H01M 4/587, H01M 10/0525, H01M 10/0568, H01M 50/186

(54) **ELECTROLYTIC SOLUTION AND LITHIUM ION SECONDARY BATTERY**

(30) Priority: 29.03.2021 JP 2021056292
(71) Applicant: KABUSHIKI KAISHA TOYOTA JIDOSHOKKI, Kariya-shi, Aichi 448-8671 (JP)
(72) Inventor: KAWAI, Tomoyuki, Kariya-shi, Aichi 448-8671 (JP); ICHIKAWA, Yuki, Kariya-shi, Aichi 448-8671 (JP); IWATA, Hiroshi, Kariya-shi, Aichi 448-8671 (JP); YOKOCHI, Satomi, Kariya-shi, Aichi 448-8671 (JP); NATSUI, Keisuke, Kariya-shi, Aichi 448-8671 (JP); SATO, Yuuhi, Kariya-shi, Aichi 448-8671 (JP); KOJIMA, Kumiko, Kariya-shi, Aichi 448-8671 (JP); YOSHIDA, Kisena, Kariya-shi, Aichi 448-8671 (JP)
(74) Representative: TBK
(86) International application number: PCT/JP2022/001511
(87) International publication number: WO 2022/209158

(57) **Abstract**

Provided is an electrolytic solution that includes: an electrolyte containing lithium salt; and a nonaqueous solvent containing cyclic alkylene carbonate and methyl propionate, the electrolyte contains lithium salt other than LiPF₆ in an amount of not less than 30 mol% with respect to a total amount of the lithium salt, and the nonaqueous solvent contains 75 volume% or more of the methyl propionate.

## Description

### Technical Field

The present invention relates to an electrolytic solution for use in a lithium ion secondary battery, and a lithium ion secondary battery in which the electrolytic solution is used.

### Background Art

A lithium ion secondary battery having an excellent capacity has been used as power supplies for mobile terminals, personal computers, electric vehicles, and the like. In recent years, net-zero carbon emission has been highly desired, and many efforts have been made for electrically operating drive sources of various devices. According thereto, characteristics of a lithium ion secondary battery are required to be further improved.

The inventor of the present invention has attempted to improve characteristics of a lithium ion secondary battery by optimizing an electrolytic solution of the lithium ion secondary battery.

In general, LiPF₆ is dissolved at a concentration of about 1 mol/L in a mixed nonaqueous solvent in which a cyclic alkylene carbonate such as ethylene carbonate and a linear carbonate such as dimethyl carbonate and ethyl methyl carbonate are mixed, to produce an electrolytic solution for a conventional lithium ion secondary battery.

For example, Patent Literature 1 discloses an electrolytic solution obtained by dissolving LiPF₆ at a concentration of 1 mol/L in a mixed nonaqueous solvent in which ethylene carbonate and ethyl methyl carbonate are mixed at a volume ratio of 3:7.

Patent Literature 2 discloses an electrolytic solution obtained by dissolving LiPF₆ at a concentration of 1 mol/L in a mixed nonaqueous solvent in which ethylene carbonate, dimethyl carbonate, and ethyl methyl carbonate are mixed at a volume ratio of 3:2:5.

### Citation List

### [Patent Literature]

Patent Literature 1: JP2010-123300(A)
Patent Literature 2: JP2013-140734(A)

### Summary of Invention

### Technical Problem

In the above-described Patent Literatures, a linear carbonate is used as a main solvent of the electrolytic solution.

The inventor of the present invention found combined use of a cyclic alkylene carbonate and methyl propionate for a nonaqueous solvent of an electrolytic solution when attempting to improve characteristics of a lithium ion secondary battery, and already filed a patent application for a lithium ion secondary battery using the electrolytic solution (Japanese Patent Application No. 2020-026926).

The above-described electrolytic solution contributes to improvement of characteristics of a lithium ion secondary battery. However, the inventor of the present invention was not content therewith and thoroughly conducted research in order to further improve the characteristics.

The present invention has been made in view of such circumstances, and an object of the present invention is to provide an electrolytic solution that imparts excellent characteristics to a lithium ion secondary battery, and a lithium ion secondary battery having excellent characteristics.

### Solution to Problem

As a result of various experiments, the inventor of the present invention has obtained finding that characteristics of a lithium ion secondary battery are further improved by using a cyclic alkylene carbonate and methyl propionate in combination as a nonaqueous solvent in an electrolytic solution, and further blending the nonaqueous solvent and lithium salt in the electrolytic solution in a specific manner. The inventor of the present invention has completed the electrolytic solution of the present invention based on such finding.

Furthermore, as a part of research for improving durability of a power storage device that includes a lithium ion secondary battery, the applicant of the present invention developed configurations of a power storage cell and a power storage device capable of inhibiting reduction of sealability for the power storage device, and already filed a patent application (Japanese Patent Application No. 2021-003409) therefor. The inventor of the present invention made various examinations also about an electrolytic solution in the lithium ion secondary battery having the above-described configuration in order to further improve sealability for the power storage cell. In the course of the examination, the inventor of the present invention has found that sealability for the power storage cell in the lithium ion secondary battery is further improved by combining the configuration and the above-described electrolytic solution of the present invention, to complete the lithium ion secondary battery of the present invention.

An electrolytic solution of the present invention which achieves the aforementioned object includes:
an electrolyte containing lithium salt; and
a nonaqueous solvent containing cyclic alkylene carbonate and methyl propionate,
the electrolyte contains lithium salt other than LiPF₆ in an amount of not less than 30 mol% with respect to a total amount of the lithium salt, and
the nonaqueous solvent contains 75 volume% or more of the methyl propionate.

A lithium ion secondary battery of the present invention which achieves the aforementioned object includes
a positive electrode having a first current collector, and a positive electrode active material layer disposed on one surface of the first current collector;
a negative electrode having a second current collector, and a negative electrode active material layer disposed on one surface of the second current collector, the negative electrode being stacked with the positive electrode such that the negative electrode active material layer opposes the positive electrode active material layer;
a separator disposed between the positive electrode active material layer and the negative electrode active material layer; and
a sealing portion disposed between the first current collector and the second current collector, the sealing portion surrounding peripheries of the positive electrode active material layer and the negative electrode active material layer, and sealing an electrolytic solution in a space between the first current collector and the second current collector, in which,
the above-described electrolytic solution of the present invention is used as the electrolytic solution.

### Advantageous Effects of Invention

The electrolytic solution of the present invention imparts excellent characteristics to a lithium ion secondary battery. Furthermore, the lithium ion secondary battery of the present invention exhibits excellent characteristics, and, in particular, has excellent structural durability.

### Brief Description of Drawings

Fig. 1 shows a graph representing change of CC discharge capacity with elapse of time in a lithium ion secondary battery of each of Example 8 and Comparative example 11;
Fig. 2 shows a graph representing change of CC discharge capacity with elapse of time in a lithium ion secondary battery of each of Example 8 and Comparative examples 8 to 10;
Fig. 3 is a diagram schematically illustrating a lithium ion secondary battery of Example 9;
Fig. 4 is a diagram schematically illustrating a lithium ion secondary battery of Example 10;
Fig. 5 is a diagram illustrating positions at which a naturally peeled length was measured in Evaluation example 9; and
Fig. 6 shows a graph representing a naturally peeled length of each of test pieces in Evaluation example 9.

### Description of Embodiments

An embodiment for carrying out the present invention will be described below. Unless otherwise specified, a numerical value range "x to y" described herein includes, in the range thereof, a lower limit x and an upper limit y. A new numerical value range may be formed by optionally combining the upper limit values and the lower limit values, and numerical values described in the examples. Numerical values optionally selected from any of the numerical value ranges may be used as the upper and lower limit values in a new numerical value range.

An electrolytic solution of the present invention improves characteristics of a lithium ion secondary battery by satisfying all of the following matters (1) to (3).
(1) An electrolyte contains lithium salt other than LiPF₆ in an amount of not less than 30 mol% with respect to a total amount of lithium salt,
(2) a nonaqueous solvent contains cyclic alkylene carbonate and methyl propionate, and
(3) the nonaqueous solvent contains 75 volume% or more of the methyl propionate.

The above-described matter (1) contributes to, in particular, improvement of structural durability among the characteristics of the lithium ion secondary battery.

The above-described matter (2) contributes to smooth charging and discharging among the characteristics of the lithium ion secondary battery. Specifically, generation of lithium ions and insertion and elimination of lithium ions into and from a negative electrode are derived from the cyclic alkylene carbonate and smoothly performed, and disadvantages of the cyclic alkylene carbonate such as high viscosity and high melting point are compensated for by methyl propionate.

Furthermore, the above-described matter (3) contributes to improvement of a capacity retention rate, output, and the like among the characteristics of the lithium ion secondary battery.

The electrolytic solution of the present invention is considered to improve the characteristics of the lithium ion secondary battery through synergetic action of these matters.

The structural durability of the lithium ion secondary battery of the present invention is improved by satisfying both the following matters (4) and (5).
(4)
   The lithium ion secondary battery includes:
   a positive electrode having a first current collector, and a positive electrode active material layer disposed on one surface of the first current collector;
   a negative electrode that has a second current collector, and a negative electrode active material layer disposed on one surface of the second current collector, and that is stacked with the positive electrode such that the negative electrode active material layer opposes the positive electrode active material layer;
   a separator disposed between the positive electrode active material layer and the negative electrode active material layer; and
   a sealing portion that is disposed between the first current collector and the second current collector, that surrounds peripheries of the positive electrode active material layer and the negative electrode active material layer, and that seals an electrolytic solution in a space between the first current collector and the second current collector.
(5) The above-described electrolytic solution of the present invention is used as the electrolytic solution.

The above-described matter (4) contributes to inhibiting reduction of sealability among the characteristics of the lithium ion secondary battery, as also described in detail in the aforementioned Japanese Patent Application No. 2021-003409.

Furthermore, the above-described matter (5) contributes to improvement of structural durability, specifically, improvement of sealability among the characteristics of the lithium ion secondary battery satisfying the above-described matter (4).

The characteristics of the lithium ion secondary battery of the present invention are improved through synergetic action of these matters.

The electrolytic solution and the lithium ion secondary battery according to the present invention will be described below with respect to each component thereof.

Firstly, the electrolytic solution of the present invention will be described.

In the electrolytic solution of the present invention, the concentration of lithium ions is preferably in a range of 0.8 to 1.8 mol/L, more preferably in a range of 0.9 to 1.5 mol/L, even more preferably in a range of 1.0 to 1.4 mol/L, and particularly preferably in a range of 1.1 to 1.3 mol/L, from the viewpoint of ionic conductivity.

An electrolyte used for the electrolytic solution of the present invention contains lithium salt, and contains lithium salt other than LiPF₆ in an amount of not less than 30 mol% with respect to the total amount of lithium salt. The electrolytic solution of the present invention may contain LiPF₆ as the lithium salt but may not necessarily contain LiPF₆.

LiPF₆ is widely used as an electrolyte for an electrolytic solution of a lithium ion secondary battery, and is relatively low-priced. The reason why the lithium salt other than LiPF₆ is used for lithium salt in the electrolytic solution of the present invention is as follows.

Hydrogen fluoride is known to be generated through reaction between LiPF₆ and water. An electrolytic solution of a typical lithium ion secondary battery contains a small amount of water. Therefore, in the lithium ion secondary battery in which the electrolytic solution contains LiPF₆, the electrolytic solution may contain hydrogen fluoride.

Furthermore, LiPF₆ is also known to be thermally unstable, and generate PF₅ at, for example, a temperature of higher than 60°C. The PF₅ may react with water to generate hydrogen fluoride.

The inventor of the present invention has thoroughly examined a composition of the electrolytic solution in order to improve the characteristics of the lithium ion secondary battery. In the course of the examination, the inventor of the present invention has found that an electrode and a container of the lithium ion secondary battery may erode due to hydrogen fluoride or PF₅ in the electrolytic solution, and the erosion of the electrode and the container may degrade durability of the lithium ion secondary battery. Particularly, in a case where a lithium ion secondary battery is configured to have a sealing portion between two current collectors as disclosed in Japanese Patent Application No. 2021-003409, if the surface of a metal portion in the current collector erodes (specifically, is fluorinated), a bonding force between the sealing portion and the current collector becomes low, the battery structurally deteriorates, and sealability by the sealing portion is thus considered to be readily reduced. This problem is particularly significant in a case where the current collector contains aluminium.

The inventor of the present invention has attempted to inhibit the above-described malfunction from being caused by LiPF₆, in order to improve structural durability of the lithium ion secondary battery. The inventor of the present invention has then found that, in a case where an electrolyte contains lithium salt other than LiPF₆ in an amount of not less than 30 mol% with respect to the total amount of lithium salt, the above-described malfunction is inhibited.

As described in detail below in Examples, according to a result of a test that was actually made by the inventor of the present invention, in a lithium ion secondary battery having a sealing portion between two current collectors, in a case where lithium salt other than LiPF₆ was contained as an electrolyte in an amount of not less than 30 mol% with respect to the total amount of lithium salt, the durability was improved as compared with a case where only LiPF₆ was contained as an electrolyte.

Specific examples of the lithium salt to be used for the electrolytic solution of the present invention include LiPF₆, LiClO₄, LiAsF₆, LiBF₄, FSO₃Li, CF₃SO₃Li, C₂F₅SO₃Li, C₃F₇SO₃Li, C₄F₉SO₃Li, C₅F₁₁SO₃Li, C₆F₁₃SO₃Li, CH₃SO₃Li, C₂H₅SO₃Li, C₃H₇SO₃Li, CF₃CH₂SO₃Li, CF₃C₂H₄SO₃Li, (FSO₂)₂NLi, (CF₃SO₂)₂NLi, (C₂F₅SO₂)₂NLi, FSO₂(CF₃SO₂)NLi, FSO₂(C₂F₅SO₂)NLi, (SO₂CF₂CF₂SO₂)NLi, (SO₂CF₂CF₂CF₂SO₂)NLi, FSO₂(CH₃SO₂)NLi, FSO₂(C₂H₅SO₂)NLi, LiPO₂F₂, LiBF₂(C₂O₄), and LiB(C₂O₄)₂. One kind of the lithium salt other than LiPF₆ may be used alone or two or more kinds of the lithium salts other than LiPF₆ may be used in combination.

As the lithium salt other than LiPF₆, in particular, the lithium salt represented by the following General formula (1) is preferable. This kind of lithium salt is unlikely to generate hydrogen fluoride or PF₅.

(R¹X¹)(R²SO₂)NLi General formula (1)

(R¹ is selected from hydrogen, a halogen, an alkyl group optionally substituted with a substituent group, a cycloalkyl group optionally substituted with a substituent group, an unsaturated alkyl group optionally substituted with a substituent group, an unsaturated cycloalkyl group optionally substituted with a substituent group, an aromatic group optionally substituted with a substituent group, a heterocyclic group optionally substituted with a substituent group, an alkoxy group optionally substituted with a substituent group, an unsaturated alkoxy group optionally substituted with a substituent group, a thioalkoxy group optionally substituted with a substituent group, an unsaturated thioalkoxy group optionally substituted with a substituent group, CN, SCN, and OCN.
R² is selected from hydrogen, a halogen, an alkyl group optionally substituted with a substituent group, a cycloalkyl group optionally substituted with a substituent group, an unsaturated alkyl group optionally substituted with a substituent group, an unsaturated cycloalkyl group optionally substituted with a substituent group, an aromatic group optionally substituted with a substituent group, a heterocyclic group optionally substituted with a substituent group, an alkoxy group optionally substituted with a substituent group, an unsaturated alkoxy group optionally substituted with a substituent group, a thioalkoxy group optionally substituted with a substituent group, an unsaturated thioalkoxy group optionally substituted with a substituent group, CN, SCN, and OCN.
R¹ and R² optionally bind with each other to form a ring.
X¹ is selected from SO₂, C=O, C=S, R^{a}P=O, R^{b}P=S, S=O, and Si=O.
R^{a}, R^{b} are each independently selected from hydrogen, a halogen, an alkyl group optionally substituted with a substituent group, a cycloalkyl group optionally substituted with a substituent group, an unsaturated alkyl group optionally substituted with a substituent group, an unsaturated cycloalkyl group optionally substituted with a substituent group, an aromatic group optionally substituted with a substituent group, a heterocyclic group optionally substituted with a substituent group, an alkoxy group optionally substituted with a substituent group, an unsaturated alkoxy group optionally substituted with a substituent group, a thioalkoxy group optionally substituted with a substituent group, an unsaturated thioalkoxy group optionally substituted with a substituent group, OH, SH, CN, SCN, and OCN. R^{a}, R^{b} each optionally bind with R¹ or R² to form a ring.)

The wording "optionally substituted with a substituent group" in the chemical structure represented by the above-described General formula (1) will be described. For example, "alkyl group optionally substituted with a substituent group" represents an alkyl group in which one or more of hydrogen atoms of the alkyl group is substituted with a substituent group or an alkyl group having no substituent group.

Examples of the substituent group in the wording "optionally substituted with a substituent group" include alkyl groups, alkenyl groups, alkynyl groups, cycloalkyl groups, unsaturated cycloalkyl groups, aromatic groups, heterocyclic groups, halogens, OH, SH, CN, SCN, OCN, nitro group, alkoxy groups, unsaturated alkoxy groups, amino group, alkylamino groups, dialkylamino groups, aryloxy groups, acyl groups, alkoxycarbonyl groups, acyloxy groups, aryloxycarbonyl groups, acylamino groups, alkoxycarbonylamino groups, aryloxycarbonylamino groups, sulfonylamino groups, sulfamoyl groups, carbamoyl group, alkylthio groups, arylthio groups, sulfonyl group, sulfinyl group, ureido groups, phosphoric acid amide groups, sulfo group, carboxyl group, hydroxamic acid groups, sulfino group, hydrazino group, imino group, and silyl group. These substituent groups may be further substituted with substituent groups. In a case where the number of the substituent groups is not less than two, the substituent groups may be the same or different from each other.

The lithium salt is preferably represented by the following General formula (1-1).

(R¹³X²)(R¹⁴SO₂)NLi General formula (1-1)

(R¹³, R¹⁴ each independently represent CₙHₐF_{b}Cl_{c}Br_{d}Iₑ(CN)_{f}(SCN)_{g}(OCN)ₕ.
n, a, b, c, d, e, f, g, h each independently represent an integer of not less than 0, and satisfy 2n+1=a+b+c+d+e+f+g+h.
R²³ and R²⁴ optionally bind with each other to form a ring. In this case, 2n=a+b+c+d+e+f+g+h is satisfied.
X² is selected from SO₂, C=O, C=S, R^{c}P=O, R^{d}P=S, S=O, and Si=O.
R^{c}, R^{d} are each independently selected from hydrogen, a halogen, an alkyl group optionally substituted with a substituent group, a cycloalkyl group optionally substituted with a substituent group, an unsaturated alkyl group optionally substituted with a substituent group, an unsaturated cycloalkyl group optionally substituted with a substituent group, an aromatic group optionally substituted with a substituent group, a heterocyclic group optionally substituted with a substituent group, an alkoxy group optionally substituted with a substituent group, an unsaturated alkoxy group optionally substituted with a substituent group, a thioalkoxy group optionally substituted with a substituent group, an unsaturated thioalkoxy group optionally substituted with a substituent group, OH, SH, CN, SCN, and OCN.
R^{c}, R^{d} each optionally bind with R²³ or R²⁴ to form a ring.)

The wording "optionally substituted with a substituent group" in the chemical structure represented by the above-described General formula (1-1) have the same meaning as described above for General formula (1).

In the chemical structure represented by the above-described General formula (1-1), n preferably represents an integer of 0 to 6, more preferably represents an integer of 0 to 4, and particularly preferably represents an integer of 0 to 2. In a case where R¹³ and R¹⁴ in the chemical structure represented by the above-described General formula (1-1) bind with each other to form a ring, n preferably represents an integer of 1 to 8, more preferably represents an integer of 1 to 7, and particularly preferably represents an integer of 1 to 3.

The lithium salt is more preferably represented by the following General formula (1-2).
(R¹⁵SO₂) (R¹⁶SO₂) NLi General formula (1-2) (R¹⁵, R¹⁶ each independently represent CₙHₐF_{b}Cl_{c}Br_{d}Iₑ.
n, a, b, c, d, e each independently represent an integer of not less than 0, and satisfy 2n+1=a+b+c+d+e.
R¹⁵ and R¹⁶ optionally bind with each other to form a ring. In this case, 2n=a+b+c+d+e is satisfied.)

In the chemical structure represented by the above-described General formula (1-2), n preferably represents an integer of 0 to 6, more preferably represents an integer of 0 to 4, and particularly preferably represents an integer of 0 to 2. In a case where R¹⁵ and R¹⁶ in the chemical structure represented by the above-described General formula (1-2) bind with each other to form a ring, n preferably represents an integer of 1 to 8, more preferably represents an integer of 1 to 7, and particularly preferably represents an integer of 1 to 3.

In the chemical structure represented by the above-described General formula (1-2), a, c, d, e preferably represent 0.

The lithium salt represented by the above-described General formula (1), (1-1), or (1-2) is preferably at least one kind of imide salt selected from (CF₃SO₂)₂NLi, (FSO₂)₂NLi, (C₂F₅SO₂)₂NLi, FSO₂(CF₃SO₂)NLi, (SO₂CF₂CF₂SO₂)NLi, and (SO₂CF₂CF₂CF₂SO₂)NLi.

In a case where, among them, (FSO₂)₂NLi is used, output and durability of the lithium ion secondary battery are improved. This is considered to be derived by reduction of viscosity of the electrolytic solution and formation of a preferable coating on a surface of a negative electrode or a positive electrode in the case of (FSO₂)₂NLi being used.

An amount of the lithium salt other than LiPF₆ in the electrolytic solution of the present invention is not less than 30 mol% with respect to the total amount of lithium salt. The preferable range is, for example, a range of not less than 50 mol%, a range of not less than 75 mol%, or a range of not less than 90 mol%, with respect to the total amount of lithium salt.

In the electrolytic solution of the present invention, the nonaqueous solvent contains a cyclic alkylene carbonate and methyl propionate.

The cyclic alkylene carbonate is a nonaqueous solvent having a high permittivity, and is considered to contribute to ionic dissociation and dissolution of lithium salt.

In general, an SEI (solid electrolyte interphase) film is known to be formed on a surface of a negative electrode by reductive degradation of a cyclic alkylene carbonate during charging of a lithium ion secondary battery. Presence of such an SEI film is considered to allow lithium ions to be reversibly inserted into and extracted from the negative electrode containing graphite.

In the electrolytic solution of the present invention, one kind of a cyclic alkylene carbonate may be merely used or a plurality of kinds of cyclic alkylene carbonates may be used in combination. Examples of the cyclic alkylene carbonate include ethylene carbonate and propylene carbonate. Among them, ethylene carbonate is particularly preferable.

The cyclic alkylene carbonate is useful as a nonaqueous solvent of an electrolytic solution but has a high viscosity. Therefore, an excessively high proportion of the cyclic alkylene carbonate adversely affects ionic conductivity in the electrolytic solution and diffusion of lithium ions in the electrolytic solution in some cases. The cyclic alkylene carbonate has a relatively high melting point, so that an excessively high proportion of the cyclic alkylene carbonate may solidify the electrolytic solution under a low temperature condition.

Meanwhile, methyl propionate is a nonaqueous solvent having a low permittivity, a low viscosity, and a low melting point.

In the electrolytic solution of the present invention, the cyclic alkylene carbonate and methyl propionate coexist, whereby the methyl propionate compensates for the disadvantages of the cyclic alkylene carbonate. That is, methyl propionate is considered to contribute to reduction of viscosity of the electrolytic solution, appropriate ionic conductivity, an appropriate diffusion coefficient of lithium ions, and prevention of solidification under a low temperature condition.

As ester having a chemical structure similar to the chemical structure of methyl propionate, methyl acetate, ethyl acetate, ethyl propionate, methyl butyrate, and ethyl butyrate are present.

As disclosed in Japanese Patent Application No. 2020-026926, the inventor of the present invention has found that methyl ester is more excellent than ethyl ester from the viewpoint of physical properties of the electrolytic solution and battery characteristics.

Melting points and boiling points of methyl propionate, methyl acetate, and methyl butyrate as methyl esters are as follows.

Methyl propionate melting point is -88°C, boiling point is 80°C

Methyl acetate melting point is -98°C, boiling point is 57°C

Methyl butyrate melting point is -95°C, boiling point is 102°C

The lithium ion secondary battery is assumed to operate in an environment of about 60°C. Therefore, the nonaqueous solvent contained in the electrolytic solution preferably has a boiling point of not lower than 60°C. Also from the viewpoint of production environment, the boiling point of the nonaqueous solvent to be used is preferably high. The greater the number of carbon atoms in ester is, the higher the lipophilicity of the ester is, and this is disadvantageous to dissociation or dissolution of lithium salt. Thus, the number of carbon atoms in ester is preferably small.

In comprehensive consideration of the above-described matters, methyl propionate is considered to be optimal as the ester. This is also supported by a result of Basic examination 2 described below.

The nonaqueous solvent in the electrolytic solution of the present invention contains 75 volume% or more of methyl propionate. Thus, in a case where a content of methyl propionate with respect to the cyclic alkylene carbonate is sufficiently large, the electrolytic solution of the present invention is allowed to enhance both charge/discharge capacity of a positive electrode and charge/discharge capacity of a negative electrode in the lithium ion secondary battery.

Although the upper limit of the content of methyl propionate is not particularly specified, a content of methyl propionate in the nonaqueous solvent may be less than 100 volume%. In order to achieve both charge/discharge capacities of a positive electrode and a negative electrode at a high level, the nonaqueous solvent preferably contains 85 volume% or less of methyl propionate, and more preferably contains 80 volume% or less of methyl propionate.

In the electrolytic solution of the present invention, the nonaqueous solvent may contain another nonaqueous solvent in addition to the cyclic alkylene carbonate and methyl propionate, or the nonaqueous solvent may be formed of the cyclic alkylene carbonate and methyl propionate. In either case, in a case where the entirety of the nonaqueous solvent is 100 volume%, the electrolytic solution of the present invention needs to contain 75 volume% or more of methyl propionate. The entirety of the nonaqueous solvent being 100 volume% means the sum of volumes of the respective nonaqueous solvents at ordinary temperature of 25°C under a normal pressure before mixing.

In the electrolytic solution of the present invention, a proportion of methyl propionate to the total of volumes of the cyclic alkylene carbonate and the methyl propionate is preferably in a range of 72 to 95 volume%, more preferably in a range of 75 to 90 volume%, and most preferably in a range of 75 to 85 volume%.

Similarly, a proportion of the cyclic alkylene carbonate to the total of the volumes of the cyclic alkylene carbonate and methyl propionate is preferably in a range of 5 to 28 volume%, more preferably in a range of 10 to 25 volume%, and most preferably in a range of 15 to 25 volume%.

Examples of the above-described other nonaqueous solvent include fluorine-containing cyclic carbonates and unsaturated cyclic carbonates. One of the other nonaqueous solvents may be used alone or the other nonaqueous solvents may be used in combination. In a case where these nonaqueous solvents are used in combination with the cyclic alkylene carbonate and methyl propionate, performance of the lithium ion secondary battery is enhanced.

Examples of the fluorine-containing cyclic carbonate include fluoroethylene carbonate, 4-(trifluoromethyl)-1,3-dioxolane-2-one, 4,4-difluoro-1,3-dioxolane-2-one, 4-fluoro-4-methyl-1,3-dioxolane-2-one, 4-(fluoromethyl)-1,3-dioxolane-2-one, 4,5-difluoro-1,3-dioxolane-2-one, 4-fluoro-5-methyl-1,3-dioxolane-2-one, and 4,5-difluoro-4,5-dimethyl-1,3-dioxolane-2-one.

Examples of the unsaturated cyclic carbonate include vinylene carbonate, fluorovinylene carbonate, methylvinylene carbonate, fluoromethylvinylene carbonate, ethylvinylene carbonate, propylvinylene carbonate, butylvinylene carbonate, dimethylvinylene carbonate, diethylvinylene carbonate, dipropylvinylene carbonate, trifluoromethylvinylene carbonate, and vinylethylene carbonate.

Particularly preferably, the electrolytic solution of the present invention contains vinylene carbonate.

An amount of the fluorine-containing cyclic carbonate and/or the unsaturated cyclic carbonate to be added in the electrolytic solution of the present invention is, for example, in a range of 0.1 to 5 mass%, in a range of 0.3 to 4 mass%, in a range of 0.5 to 3 mass%, or in a range of 1 to 2 mass%, with respect to the total of masses of components other than the fluorine-containing cyclic carbonate and the unsaturated cyclic carbonate.

The electrolytic solution of the present invention may contain an additive. As the additive, an additive that starts reductive degradation at a potential higher than a potential at which other components of the electrolytic solution, specifically, the cyclic alkylene carbonate and methyl propionate, start reductive degradation, is preferably selected.

Specific examples of the additive include cyclic sulfate ester, oxalate borate, and dihalogenated phosphate. One kind of the additive may be used alone, or a plurality of kinds of these additives may be used in combination.

The cyclic sulfate ester is a compound represented by the following chemical formula.
R-O-SO₂-O-R (two Rs each represent an alkyl group and bind with each other to form a ring together with -O-S-O-.)

Examples of the cyclic sulfate ester include 5 to 9-membered ring, 5 to 8-membered ring, and 5 to 7-membered ring sulfate esters. The number of carbon atoms in the cyclic sulfate ester is, for example, 2 to 6, 2 to 5, or 2 to 4.

The oxalate borate is preferably lithium salt. Specific examples of the oxalate borate include LiB(C₂O₄)₂ and LiB (C₂O₄)X₂ (X represents a halogen selected from F, Cl, Br, and I).

The oxalate borate is preferably LiB(C₂O₄)₂, that is, lithium bis (oxalato) borate, and/or LiB(C₂O₄)F₂, that is, lithium difluoro(oxalato)borate.

The dihalogenated phosphate is preferably lithium salt. Specific examples of the dihalogenated phosphate include LiPO₂X₂ (X represents a halogen selected from F, Cl, Br, and I).

An amount of the additive to be added in the electrolytic solution of the present invention is, for example, in a range of 0.1 to 5 mass%, in a range of 0.3 to 4 mass%, in a range of 0.5 to 3 mass%, or in a range of 1 to 2 mass%, with respect to the total of masses of components other than the additive.

The lithium ion secondary battery of the present invention in which the electrolytic solution of the present invention is used will be described below.

The lithium ion secondary battery of the present invention includes a positive electrode, a negative electrode, a separator, a sealing portion, and an electrolytic solution. Among them, the electrolytic solution is one described above.

The positive electrode has a first current collector, and a positive electrode active material layer disposed on one surface of the first current collector.

The negative electrode has a second current collector, and a negative electrode active material layer disposed on one surface of the second current collector. The negative electrode is stacked with the positive electrode such that the negative electrode active material layer opposes the positive electrode active material layer of the positive electrode.

In the description herein, in a case where a current collector is simply referred to, the current collector collectively refers to the first current collector and the second current collector. In a case where an electrode active material is referred to, the electrode active material collectively refers to a positive electrode active material and a negative electrode active material. In a case where an electrode active material layer is referred to, the electrode active material layer collectively refers to the positive electrode active material and the negative electrode active material.

The current collector is a chemically inert electron conductor for continuously sending a current flow to the electrode during discharging or charging of the lithium ion secondary battery. Examples of the current collector include at least one selected from silver, copper, gold, aluminium, magnesium, tungsten, cobalt, zinc, nickel, iron, platinum, tin, indium, titanium, ruthenium, tantalum, chromium, and molybdenum, and a metal material such as stainless steel. The effect of improving durability as an effect exhibited by the lithium ion secondary battery of the present invention is significant particularly in a case where the first current collector as the current collector for the positive electrode is aluminium. That is, the first current collector is particularly preferably made of aluminium.

The current collector may be coated with a known protective layer. A current collector having a surface treated in a known method may be used as the current collector.

The current collector takes the form of, for example, foil, a sheet, a film, a line shape, a bar shape, or a mesh. Therefore, as the current collector, for example, metal foil such as copper foil, nickel foil, aluminium foil, or stainless steel foil is suitably used. In a case where the current collector is in the form of foil (hereinafter, referred to as current collector foil), the current collector preferably has a thickness in a range of 1 um to 100 µm.

The positive electrode active material may be any one that occludes and releases lithium ions, and examples of the positive electrode active material include lithium composite metal oxide which is represented by general formula: LiₐNi_{b}Co_{c}Mn_{d}DₑO_{f} (0.2≤a≤2, b+c+d+e=1, 0≤e<1, D represents at least one element selected from W, Mo, Re, Pd, Ba, Cr, B, Sb, Sr, Pb, Ga, Al, Nb, Mg, Ta, Ti, La, Zr, Cu, Ca, Ir, Hf, Rh, Fe, Ge, Zn, Ru, Sc, Sn, In, Y, Bi, S, Si, Na, K, P, and V, 1.7≤f≤3) and which has a layered rock-salt structure, or Li₂MnO₃. Furthermore, examples of the positive electrode active material include metal oxide having a spinel structure such as LiMn₂O₄, a solid solution formed from a mixture of metal oxide having a spinel structure and a layer compound, and a polyanion-based compound represented by, for example, LiMPO₄, LiMVO₄, or Li₂MSiO₄ (where M is selected from at least one of Co, Ni, Mn, and Fe). Moreover, examples of the positive electrode active material include a tavorite-based compound represented by LiMPO₄F (M is a transition metal) such as LiFePO₄F, and a borate-based compound represented by LiMBOs (M is a transition metal) such as LiFeBOs. Any metal oxide used as the positive electrode active material may have a basic composition of the composition formulae described above, and a metal oxide in which a metal element included in the basic composition is substituted with another metal element may also be used. One kind of the positive electrode active material may be used alone or a plurality of kinds of the positive electrode active materials may be used in combination.

Among them, the positive electrode active material having an olivine structure has excellent thermal stability, and is thus suitable as the positive electrode active material for the lithium ion secondary battery.

The positive electrode active material having an olivine structure may be prepared by obtaining a commercially available positive electrode active material or by producing the positive electrode active material with reference to the methods described in the following documents and the like. A carbon-coated positive electrode active material is preferable as the positive electrode active material having an olivine structure.
JPH11-25983(A)
JP2002-198050(A)
JP2005-522009(A)
JP2012-79554 (A)

LiₐM_{b}PO₄ (M represents at least one element selected from Mn, Fe, Co, Ni, Cu, Mg, Zn, V, Ca, Sr, Ba, Ti, Al, Si, B, Te, and Mo. a satisfies 0.9≤a≤1.2 and b satisfies 0.6≤b≤1.1) is one example of the positive electrode active material having an olivine structure as represented by the chemical formula.

Examples of the range of a include 0.95≤a≤1.1 and 0.97≤a≤1.05.

M in LiₐM_{b}PO₄ is preferably at least one element selected from Mn, Fe, Co, Ni, Mg, V, and Te, and M is more preferably formed of two or more kinds of the elements. M is more preferably selected from Mn, Fe, and V. b preferably satisfies 0.95≤b≤1.05.

LiₐM_{b}PO₄ is more preferably represented by LiMnₓFe_{y}PO₄ (x, y satisfy x+y=1, 0<x<1, and 0<y<1) in which Mn and Fe are essential elements. Examples of ranges of x and y include 0.5≤x≤0.9 and 0.1≤y≤0.5, and 0.6≤x≤0.8 and 0.2≤y≤0.4, and further include 0.7≤x≤0.8 and 0.2≤y≤0.3.

Although LiFePO₄ is generally used as the positive electrode active material having an olivine structure, LiMnₓFe_{y}PO₄ in which Mn and Fe coexist is known to have a higher reaction potential than LiFePO₄.

The positive electrode active material layer optionally contains an additive such as a conductive additive, a binding agent, and a dispersant in addition to the positive electrode active material.

A proportion of the positive electrode active material in the positive electrode active material layer is, for example, in a range of 70 to 99 mass%, in a range of 80 to 98 mass%, or in a range of 90 to 97 mass%.

The conductive additive is added in order to enhance conductivity of the electrode. Therefore, the conductive additive is added as appropriate in a case where conductivity of the electrode is insufficient, and the conductive additive need not be added in a case where the conductivity of the electrode is sufficiently excellent.

The conductive additive may be a chemically inert fine electron conductor, and examples thereof include carbon black as carbonaceous fine particles, graphite, vapor grown carbon fiber, carbon nanotube, and various metal particles. Examples of carbon black include acetylene black, KETJENBLACK (registered trademark), furnace black, and channel black. One kind of the conductive additive may be added alone or two or more kinds of the conductive additives may be added in combination, to the positive electrode active material layer.

A blending amount of the conductive additive is not particularly limited. A proportion of the conductive additive in the positive electrode active material layer is preferably in a range of 1 to 7 mass%, more preferably in a range of 2 to 6 mass%, and even more preferably in a range of 3 to 5 mass%.

The binding agent acts so as to adhere the positive electrode active material and the conductive additive to the surface of the current collector. Examples of the binding agent include fluorine-containing resins such as polyvinylidene fluoride, polytetrafluoroethylene, and fluororubber, thermoplastic resins such as polypropylene and polyethylene, imide-based resins such as polyimide and polyamide-imide, alkoxysilyl group-containing resins, poly(meth)acrylate-based resins, polyacrylic acid, polyvinyl alcohol, polyvinylpyrrolidone, carboxymethylcellulose, and styrene butadiene rubber.

A blending amount of the binding agent is not particularly limited. A proportion of the binding agent in the positive electrode active material layer is preferably in a range of 0.5 to 7 mass%, more preferably in a range of 1 to 5 mass%, and even more preferably in a range of 2 to 4 mass%.

As the additive such as a dispersant other than the conductive additive and the binding agent, a known additive is adopted.

As the negative electrode active material, a material capable of occluding and releasing a charge carrier is used. Therefore, the negative electrode active material is not particularly limited as long as the negative electrode active material is an elemental substance, an alloy, or a compound capable of occluding and releasing a charge carrier such as lithium ions. For example, as the negative electrode active material, Li, group 14 elements such as carbon, silicon, germanium, and tin, group 13 elements such as aluminium and indium, group 12 elements such as zinc and cadmium, group 15 elements such as antimony and bismuth, alkaline earth metals such as magnesium and calcium, and group 11 elements such as silver and gold may be used in the form of an elemental substance. Specific examples of the alloy or the compound include tin-based materials such as Ag-Sn alloys, Cu-Sn alloys, and Co-Sn alloys, carbon-based materials such as various kinds of graphites, silicon-based materials such as SiOₓ (0.3≤x≤1.6) that undergo disproportionation into the elemental substance silicon and silicon dioxide, and a complex obtained by combining a carbon-based material with elemental substance silicon or a silicon-based material. In addition, as the negative electrode active material, an oxide such as Nb₂O₅, TiO₂, Li₄Ti₅O₁₂, WO₂, MoO₂, and Fe₂O₃, or a nitride represented by Li₃₋ₓMₓN (M=Co, Ni, Cu) may be used. As the negative electrode active material, one or more kinds thereof may be used.

A proportion of the negative electrode active material in the negative electrode active material layer is, for example, in a range of 70 to 99 mass%, in a range of 80 to 98.5 mass%, in a range of 90 to 98 mass%, or in a range of 95 to 97.5 mass%.

The negative electrode active material layer optionally contains an additive such as a binding agent and a dispersant other than the negative electrode active material. As the binding agent, the binding agent described for the positive electrode is appropriately adopted as necessary. As the additive such as a dispersant, a known additive is used.

A blending amount of the binding agent is not particularly limited. A proportion of the binding agent in the negative electrode active material layer is preferably in a range of 0.5 to 7 mass%, more preferably in a range of 1 to 5 mass%, and even more preferably in a range of 2 to 4 mass%.

In order to form the active material layer on the surface of the current collector, the active material is applied to the surface of the current collector by using a conventionally known method such as a roll coating method, a die coating method, a dip coating method, a doctor blade method, a spray coating method, and a curtain coating method. Specifically, the active material, a solvent, and, as necessary, the binding agent and the conductive additive are mixed to produce an active material layer forming composition in a slurry form, and the active material layer forming composition is applied to the surface of the current collector and thereafter dried. Examples of the solvent include N-methyl-2-pyrrolidone, methanol, methyl isobutyl ketone, and water. In order to enhance an electrode density, the dried product may be compressed.

The active material layer may be formed by using the production method disclosed in JP2015-201318(A) and the like.

Specifically, in the method, a mixture containing the active material, the binding agent, and the solvent is granulated, to obtain granular products in a wet state, the aggregate of the granular products is put into a predetermined mold to obtain a flat-plate-shaped molded product, and the flat-plate-shaped molded product is thereafter adhered to the surface of the current collector by using a transfer roll, to form the active material layer.

In the lithium ion secondary battery of the present invention, a positive electrode active material having an olivine structure may be selected as the positive electrode active material, and graphite may be selected as the negative electrode active material. The lithium ion secondary battery that includes the positive electrode which has the positive electrode active material having an olivine structure, and the negative electrode having graphite as the negative electrode active material, has excellent thermal stability but has a low capacity per unit volume of the electrode.

A high-capacity lithium ion secondary battery is industrially required. As a method for responding to the request, a method in which an amount of each of the positive electrode active material and the negative electrode active material per electrode is increased, specifically, a method in which amounts of the positive electrode active material layer and the negative electrode active material layer to be applied to the current collector foils are increased, is considered. Through the method in which the amounts of the positive electrode active material layer and the negative electrode active material layer to be applied to the current collector foils are increased, a mass (hereinafter, may be referred to as "weight per area of the positive electrode") of the positive electrode active material layer on one square centimeter area of one surface of the current collector foil of the positive electrode, and a mass (hereinafter, may be referred to as "weight per area of the negative electrode") of the negative electrode active material layer on one square centimeter area of one surface of the current collector foil of the negative electrode, are increased.

The weight per area of the positive electrode is preferably not less than 20 mg/cm². Preferably, the weight per area of the positive electrode is, for example, in a range of 30 to 200 mg/cm², in a range of 35 to 150 mg/cm², in a range of 40 to 120 mg/cm², or in a range of 50 to 100 mg/cm².

The weight per area of the negative electrode is preferably not less than 10 mg/cm². Preferably, the weight per area of the negative electrode is, for example, in a range of 15 to 100 mg/cm², in a range of 17 to 75 mg/cm², in a range of 20 to 60 mg/cm², or in a range of 25 to 50 mg/cm².

In general, in a lithium ion secondary battery including a thickly coated electrode in which a weight per area is great and an active material layer has a great thickness, a rate characteristics deterioration phenomenon in which charge/discharge capacity at a high rate becomes insufficient as compared with charge/discharge capacity at a low rate occurs. The rate characteristics deterioration phenomenon is considered to be related to diffusion resistance of lithium ions in the lithium ion secondary battery, and the diffusion resistance of lithium ions is considered to be related to a viscosity of an electrolytic solution and a diffusion coefficient of lithium ions in the electrolytic solution.

The electrolytic solution of the present invention has a low viscosity due to presence of methyl propionate, and is designed in consideration of a diffusion coefficient of lithium ions. Therefore, in the lithium ion secondary battery of the present invention, the rate characteristics deterioration phenomenon is inhibited to some degree even in a case where, for example, the positive electrode has a great weight per area in a range of 30 to 200 mg/cm², and the negative electrode has a great weight per area in a range of 15 to 100 mg/cm².

In a case where the lithium ion secondary battery of the present invention is not a so-called wound-type lithium ion secondary battery in which electrodes are wound and stored in a container, but a so-called cell-stack-type lithium ion secondary battery in which electrodes are stacked and maintained without winding the electrodes, damage to the electrode active material layer during winding need not be taken into consideration. Therefore, the lithium ion secondary battery is suitable as a lithium ion secondary battery that includes an electrode having a great weight per area.

In the lithium ion secondary battery of the present invention, the positive electrode active material layer is disposed on one surface of the first current collector, and the negative electrode active material is disposed on one surface of the second current collector. The positive electrode active material layer may be disposed on the other surface of the first current collector or the negative electrode active material layer may be disposed on the other surface of the first current collector. Similarly, the positive electrode active material layer may be disposed on the other surface of the second current collector or the negative electrode active material layer may be disposed on the other surface of the second current collector. Furthermore, the other surface of the first current collector having the positive electrode active material layer on the one surface, and the other surface of the second current collector having the negative electrode active material layer on the one surface may be stacked and integrated with each other. In this case, the first current collector and the second current collector are regarded as forming a current collector having a multilayer structure described below. In this case, the positive electrode active material layer is disposed on one surface (or the other surface) of the two-layer current collector in which the first current collector and the second current collector are integrated, and the negative electrode active material layer is disposed on the other surface (or the one surface) of the two-layer current collector.

That is, the electrode of the lithium ion secondary battery of the present invention may be an electrode having the same type of active material layer on each of both the surfaces of the current collector, that is, an electrode having the positive electrode active material layer and the positive electrode active material layer, or an electrode having the negative electrode active material layer and the negative electrode active material layer. Alternatively, the electrode of the lithium ion secondary battery of the present invention may be an electrode having different types of active material layers on both the surfaces, respectively, of the current collector, that is, a bipolar electrode having the positive electrode active material layer and the negative electrode active material layer.

In either case, the positive electrode and the negative electrode are stacked such that the negative electrode active material layer opposes the positive electrode active material layer, and the separator is disposed between the positive electrode active material layer and the negative electrode active material layer in the direction (hereinafter, referred to as opposing direction) in which the negative electrode active material layer and the positive electrode active material layer oppose each other.

Each of the first current collector and the second current collector may have a monolayer structure in which each of the first current collector and the second current collector is formed of a single metal, or a multilayer structure in which each of the first current collector and the second current collector is formed of a plurality of different metals. The first current collector and the second current collector may be stacked and integrated to form a multilayer structure. In a case where the first current collector and the second current collector form the multilayer structure, for example, the first current collector (or the second current collector) is plated with the second current collector (or the first current collector), or the second current collector (or the first current collector) is rolled and joined to the first current collector (or the second current collector). Alternatively, the first current collector and the second current collector having been separately molded, are joined and integrated by, for example, an electrically conductive adhesive. Specific examples of the first current collector and the second current collector that form the multilayer structure include metal foil in which aluminium foil is plated with copper or nickel.

The separator has a function of isolating the positive electrode and the negative electrode from each other, and allowing lithium ions to pass therethrough while preventing contact between both the electrodes from causing shortcircuiting.

As the separator, a known separator is used. Examples of the separator include porous materials, nonwoven fabrics, and woven fabrics using one or more types of materials having electrical insulation property such as: synthetic resins such as polytetrafluoroethylene, polypropylene, polyethylene, polyimide, polyamide, polyaramide (aromatic polyamide), polyester, and polyacrylonitrile; polysaccharides such as cellulose and amylose; natural polymers such as fibroin, keratin, lignin, and suberin; and ceramics. A separator having a multilayer structure may also be used. Specifically, in order to achieve high adhesion between the electrode and the separator, for example, an adhesive separator in which an adhesive layer is formed on the separator, and an application-type separator in which high-temperature heat-resistance is enhanced by forming, on the separator, a coating film containing an inorganic filler or the like, are used.

As described above, in the lithium ion secondary battery of the present invention, the positive electrode active material layer and the negative electrode active material layer oppose each other. The positive electrode active material layer is formed on one surface of the first current collector, and the negative electrode active material layer is formed on one surface of the second current collector. Therefore, the positive electrode active material layer and the negative electrode active material layer are disposed between the first current collector and the second current collector.

The lithium ion secondary battery of the present invention includes the sealing portion between the first current collector and the second current collector in the opposing direction. The sealing portion surrounds the periphery of each of the positive electrode active material layer and the negative electrode active material layer, and has a function of sealing the electrolytic solution in a space between the first current collector and the second current collector. In other words, in the lithium ion secondary battery of the present invention, a power storage cell is formed so as to have the positive electrode active material layer, the separator, the negative electrode active material layer, and the electrolytic solution between a pair of the first current collector and the second current collector, and the power storage cell is demarcated from the outside by the sealing portion. The lithium ion secondary battery of the present invention may merely include the one power storage cell or may include a plurality of the power storage cells.

The lithium ion secondary battery of the present invention has the above-described structure, and thus allows the container to have a small size and a light weight and allows wiring such as a lead wire to be reduced. Thus, in the lithium ion secondary battery of the present invention having the above-described structure, an energy density per unit volume and weight is enhanced. Furthermore, the lithium ion secondary battery of the present invention having the above-described structure is suitably implemented as a cell-stack-type lithium ion secondary battery, and is allowed to have an electrode having a great weight per area as described above.

The sealing portion functions as a seal material for sealing the electrolytic solution inside a power storage cell, and also functions as a spacer for electrically isolating the first current collector and the second current collector that constitute the same power storage cell from each other. The sealing portion that exhibits such a function may have such a shape as to store the positive electrode active material layer and the negative electrode active material layer on the inner circumferential side, specifically, may have an annular shape or a tubular shape.

A material of the sealing portion may be any material that exhibits the above-described functions, and is preferably a resin material. As the material of the sealing portion, an olefin or an acid-modified olefin is preferable, and specific examples thereof include polyethylene, polypropylene, acid-modified polyethylene, and acid-modified polypropylene.

The sealing portion is preferably fixed to the first current collector and the second current collector by a typical method such as adhesion or welding. This is for sealing the electrolytic solution between the first current collector and the second current collector that constitute the same cell with high reliability, and appropriately maintaining positions of the first current collector and the second current collector relative to each other, and positions of the positive electrode active material layer, the separator, and the negative electrode active material layer relative to each other. A method for fixing the sealing portion to the first current collector and the second current collector is, but is not particularly limited to, for example, a method such as adhesion, welding, and fusing.

As long as the sealing portion surrounds the periphery of each of the positive electrode active material layer and the negative electrode active material layer, the sealing portion may be in contact with an outer edge portion of the positive electrode active material layer or an outer edge portion of the negative electrode active material layer, or may be separate therefrom. In order to improve durability of the lithium ion secondary battery and address expansion and contraction of the cell while the lithium ion secondary battery is used, the sealing portion is preferably separate from an outer edge portion of the positive electrode active material layer and an outer edge portion of the negative electrode active material layer.

A specific method for producing the lithium ion secondary battery will be described.

For example, the positive electrode having the positive electrode active material layer formed on one surface of the first current collector and the negative electrode having the negative electrode active material layer formed on one surface of the second current collector are disposed such that the positive electrode active material layer and the negative electrode active material layer oppose each other through the separator. At this time, the sealing portion is further disposed between the first current collector and the second current collector so as to surround the positive electrode active material layer and the negative electrode active material layer, and the sealing portion is fixed to the first current collector and the second current collector. Furthermore, at this time, the electrolytic solution is sealed in the sealing portion. Thus, the lithium ion secondary battery is produced.

Depending on the structure of the separator, a first sealing portion is disposed between the first current collector and the separator, and a second sealing portion is disposed between the separator and the second current collector, and the first sealing portion and the second sealing portion are integrated by a method such as adhesion.

The lithium ion secondary battery of the present invention may be mounted on a vehicle. The vehicle may be a vehicle that uses, as all or one portion of the source of power, electrical energy obtained from the lithium ion secondary battery, and examples thereof include electric vehicles and hybrid vehicles. When the lithium ion secondary battery is to be mounted on the vehicle, a plurality of the lithium ion secondary batteries may be connected in series to form an assembled battery. Other than the vehicles, examples of instruments on which the lithium ion secondary battery may be mounted include various home appliances, office instruments, and industrial instruments driven by a battery such as personal computers and portable communication devices. In addition, the lithium ion secondary battery of the present invention may be used as power storage devices and power smoothing devices for wind power generation, photovoltaic power generation, hydroelectric power generation, and other power systems, power supply sources for auxiliary machineries and/or power of ships, etc., power supply sources for auxiliary machineries and/or power of aircraft and spacecraft, etc., auxiliary power supply for vehicles that do not use electricity as a source of power, power supply for movable household robots, power supply for system backup, power supply for uninterruptible power supply devices, and power storage devices for temporarily storing power required for charging at charge stations for electric vehicles.

Although the present invention has been described above, the present invention is not limited to the embodiment. Without departing from the gist of the present invention, the present invention can be implemented in various modes with modifications and improvements, etc., that can be made by a person skilled in the art.

### Examples

The present invention will be more specifically described below by indicating basic examinations, examples, comparative examples, and the like. The present invention is not limited to these examples.

### <Basic examination 1 Evaluation of viscosity of electrolytic solution>

(FSO₂)₂NLi and LiPF₆ were dissolved at proportions indicated below in Table 1 in a mixed solvent in which ethylene carbonate and methyl propionate were mixed at a volume ratio of 30:70, to produce electrolytic solutions 1 to 3.

For the electrolytic solutions 1 to 3, the viscosity was measured under the following conditions. Table 1 indicates the results.

### <Viscosity>

A viscosity of each electrolytic solution at 25°C was measured by a type B viscometer (Brookfield, DV2T) with use of a cone-type spindle. The rotation speed of the cone-type spindle was 60 rpm.

**[Table 1]**

| | Lithium salt | | Nonaqueous solvent (volume%) | | viscosity (cP) |
|---|---|---|---|---|---|
| | LiFSI (mol%) | LiPF₆ (mol/L) | EC | MP | |
| Electrolytic solution 1 | 30 | 1.4 | 30 | 70 | 6.9 |
| Electrolytic solution 2 | 50 | 1 | 30 | 70 | 6.9 |
| Electrolytic solution 3 | 0 | 2 | 30 | 70 | 7.5 |

| | | | | | |
|---|---|---|---|---|---|
| LiFSI: (FSO₂)₂NLi, EC: ethylene carbonate, MP: methyl propionate | | | | | |

As indicated in Table 1, in a case where an amount of (FSO₂)₂NLi with respect to the total of lithium salt was not less than 30 mol%, the viscosity of the electrolytic solution was reduced. Thus, ionic conductivity of the electrolytic solution was considered to also be enhanced. This result indicates that, in a case where (FSO₂)₂NLi is used as lithium salt, an amount of the (FSO₂)₂NLi with respect to the total of lithium salt is preferably not less than 30 mol%, from the viewpoint of viscosity and ionic conductivity.

### <Basic examination 2 Examination of ester in electrolytic solution>

Electrolytic solutions in which propyl propionate, methyl butyrate, and ethyl butyrate were used as esters having chemical structures similar to the chemical structure of methyl propionate, were produced, and influence of these esters on battery characteristics was examined.

### [Electrolytic solution]

- LiPF₆ was dissolved at a concentration of 1.2 mol/L in a mixed solvent in which ethylene carbonate and methyl propionate were mixed at a volume ratio of 15:85, to produce a mother liquor. Lithium difluoro(oxalato)borate (hereinafter, may be abbreviated as LiDFOB. LiDFOB is one mode of oxalate borate) in an amount equivalent to 1 mass% with respect to the mother liquor and vinylene carbonate in an amount equivalent to 1 mass% with respect to the mother liquor were added and dissolved, to produce electrolytic solution 4.
- LiPF₆ was dissolved at a concentration of 1.2 mol/L in a mixed solvent in which ethylene carbonate and propyl propionate (hereinafter, may be abbreviated as PP) were mixed at a volume ratio of 15:85, to produce a mother liquor. LiDFOB in an amount equivalent to 1 mass% with respect to the mother liquor and vinylene carbonate in an amount equivalent to 1 mass% with respect to the mother liquor were added and dissolved, to produce an electrolytic solution 5.
- LiPF₆ was dissolved at a concentration of 1.2 mol/L in a mixed solvent in which ethylene carbonate and methyl butyrate (hereinafter, may be abbreviated as MB) were mixed at a volume ratio of 15:85, to produce a mother liquor. LiDFOB in an amount equivalent to 1 mass% with respect to the mother liquor and vinylene carbonate in an amount equivalent to 1 mass% with respect to the mother liquor were added and dissolved, to produce an electrolytic solution 6.

- LiPF₆ was dissolved at a concentration of 1.2 mol/L in a mixed solvent in which ethylene carbonate and ethyl butyrate (hereinafter, may be abbreviated as EB) were mixed at a volume ratio of 15:85, to produce a mother liquor. LiDFOB in an amount equivalent to 1 mass% with respect to the mother liquor and vinylene carbonate in an amount equivalent to 1 mass% with respect to the mother liquor were added and dissolved, to produce an electrolytic solution 7.
- Ethylene carbonate, ethyl methyl carbonate, and dimethyl carbonate were mixed at a volume ratio of 30:30:40, to produce a mixed solvent. LiPF₆ was dissolved in the mixed solvent to produce a mother liquor in which the concentration of the LiPF₆ was 1 mol/L. LiDFOB in an amount equivalent to 0.2 mol/L with respect to the mother liquor and vinylene carbonate in an amount equivalent to 1 mass% with respect to the mother liquor were added and dissolved, to produce an electrolytic solution 8.

### [Lithium ion secondary battery]

The electrolytic solutions 4 to 8 were used to produce the lithium ion secondary batteries as follows.

LiFePO₄ having an olivine structure and coated with carbon, acetylene black, and polyvinylidene fluoride were mixed as a positive electrode active material, a conductive additive, and a binding agent, respectively, such that a mass ratio among the positive electrode active material, the conductive additive, and the binding agent was 90:5:5, and N-methyl-2-pyrrolidone was added as a solvent, to produce a positive electrode active material layer forming composition in a slurry form. Aluminium foil was prepared as a current collector for a positive electrode. The positive electrode active material layer forming composition was applied to the surface of the aluminium foil into a film-like form, and the solvent was thereafter removed, to produce a positive electrode precursor. The produced positive electrode precursor was pressed in the thickness direction, to produce the positive electrode having the positive electrode active material layer formed on the surface of the aluminium foil.

The positive electrode was produced such that the weight per area of the positive electrode as a target was 13.9 mg/cm².

Graphite as a negative electrode active material, and carboxymethylcellulose and styrene butadiene rubber as a binding agent were mixed such that a mass ratio among the graphite, the carboxymethylcellulose, and the styrene butadiene rubber was 97:0.8:2.2, and water was added as a solvent, to produce a negative electrode active material layer forming composition in a slurry form. Copper foil was prepared as a current collector for a negative electrode. The negative electrode active material layer forming composition was applied to the surface of the copper foil into a film-like form, and the solvent was thereafter removed, to produce a negative electrode precursor. The produced negative electrode precursor was pressed in the thickness direction, to produce the negative electrode having the negative electrode active material layer formed on the surface of the copper foil.

The negative electrode was produced such that the weight per area of the negative electrode as a target was 6.3 mg/cm².

A porous polypropylene film was prepared as a separator. The separator was held between the positive electrode and the negative electrode, to produce an electrode assembly. The electrode assembly and the electrolytic solution 4 were put in a laminate film in a bag-like form and sealed, to produce a lithium ion secondary battery 4. Similarly, the electrolytic solutions 5 to 8 were used to produce lithium ion secondary batteries 5 to 8.

### [Storage test]

CC-CV charging to 4.0 V was performed at a rate of 0.4 C for the lithium ion secondary butteries 4 to 8, and a charge capacity at this time was set as a reference (SOC of 100%). A storage test in which each lithium ion secondary battery at the SOC of 100 was stored at 40°C for 11 days, was performed.

Before and after the storage test, capacities were confirmed. Specifically, CC-CV charging to 4.0 V was performed at a rate of 0.4 C. Subsequently, CC-CV discharging to 2.5 V was performed at a rate of 1 C. Thus, a discharge capacity of each lithium ion secondary battery was confirmed. A percentage of the discharge capacity after the storage test to a discharge capacity before the storage test was set as a capacity retention rate of each lithium ion secondary battery.

After the storage test, a voltage change amount was measured when each lithium ion secondary battery in which the SOC was adjusted to 60% was discharged at a constant current rate under a condition of 25°C for five seconds. The measurement was performed under a plurality of conditions generated by changing the current rate. A constant current (mA) at which a time for discharging to a voltage of 2.5 V was 10 seconds was calculated for each lithium ion secondary battery having the SOC of 60% according to the obtained results. A value obtained by multiplying the voltage change amount in change from the SOC of 60% to 2.5 V, by the calculated constant current, was set as an output.

Table 2 indicates the results of the above-described storage test.

**[Table 2]**

| | Nonaqueous solvent | Capacity retention rate | Output |
|---|---|---|---|
| Lithium ion secondary battery 4 | EC and MP | 95.6% | 1649 mW |
| Lithium ion secondary battery 5 | EC and PP | 96.2% | 1137 mW |
| Lithium ion secondary battery 6 | EC and MB | 95.8% | 1328 mW |
| Lithium ion secondary battery 7 | EC and EB | 95.8% | 1052 mW |
| Lithium ion secondary battery 8 | EC, EMC, and DMC | 95.6% | 1405 mW |

As indicated in Table 2, the lithium ion secondary battery 4 in which methyl propionate was used as the nonaqueous solvent of the electrolytic solution was excellent in both the capacity retention rate and the output, and, in particular, exhibited much more excellent output than the lithium ion secondary battery 8 in which the carbonate-based nonaqueous solvents were used. According to this result, usefulness obtained by selecting methyl propionate as the nonaqueous solvent is supported.

### (Example 1)

An electrolytic solution and a lithium ion secondary battery of Example 1 will be described below. The lithium ion secondary battery of Example 1 had a typical structure except that an electrode had a great weight per area, unlike the above-described lithium ion secondary battery of the present invention.

### [Electrolytic solution]

(FSO₂)₂NLi was dissolved at a concentration of 1.2 mol/L in a mixed solvent in which ethylene carbonate and methyl propionate were mixed at a volume ratio of 15:85, to produce a mother liquor. Vinylene carbonate was added and dissolved in an amount equivalent to 1 mass% with respect to the mother liquor, to produce an electrolytic solution of Example 1.

### [Lithium ion secondary battery]

Graphite as a negative electrode active material, and carboxymethylcellulose and styrene butadiene rubber as a binding agent were mixed such that a mass ratio among the graphite, the carboxymethylcellulose, and the styrene butadiene rubber was 94.8:0.8:4.4, and water was added as a solvent, to produce a negative electrode active material layer forming composition in a slurry form. Copper foil was prepared as a current collector for a negative electrode. The negative electrode active material layer forming composition was applied to the surface of the copper foil into a film-like form, and the solvent was thereafter removed, to produce a negative electrode precursor. The produced negative electrode precursor was pressed in the thickness direction, to produce the negative electrode having the negative electrode active material layer formed on the surface of the copper foil.

The weight per area of the negative electrode was 26.5 mg/cm².

LiFePO₄ having an olivine structure and coated with carbon, acetylene black, and polyvinylidene fluoride were mixed as a positive electrode active material layer, a conductive additive, and a binding agent, respectively, such that a mass ratio among the positive electrode active material, the conductive additive, and the binding agent was 88.8:5.1:6.1, and N-methyl-2-pyrrolidone was added as a solvent, to produce a positive electrode active material layer forming composition in a slurry form. Aluminium foil was prepared as a current collector for a positive electrode. The positive electrode active material layer forming composition was applied to the surface of the aluminium foil into a film-like form, and the solvent was thereafter removed, to produce a positive electrode precursor. The produced positive electrode precursor was pressed in the thickness direction, to produce the positive electrode having the positive electrode active material layer formed on the surface of the aluminium foil.

The weight per area of the positive electrode was 55.5 mg/cm².

A porous polypropylene film was prepared as a separator. The separator was held between the positive electrode and the negative electrode, to produce an electrode assembly. The electrode assembly and the electrolytic solution of Example 1 were put in a laminate film in a bag-like form and sealed, to produce a lithium ion secondary battery of Example 1.

### (Example 2)

An electrolytic solution of Example 2 was the same as the electrolytic solution of Example 1 except for a volume ratio between ethylene carbonate and methyl propionate.

Specifically, in Example 2, (FSO₂)₂NLi was dissolved at a concentration of 1.2 mol/L in a mixed solvent in which ethylene carbonate and methyl propionate were mixed at a volume ratio of 25:75, to produce a mother liquor. Vinylene carbonate was added and dissolved in an amount equivalent to 1 mass% with respect to the mother liquor, to produce the electrolytic solution of Example 2.

A lithium ion secondary battery of Example 2 was the same as the lithium ion secondary battery of Example 1 except that the electrolytic solution of Example 2 was used.

### (Comparative example 1)

An electrolytic solution of Comparative example 1 was the same as the electrolytic solution of Example 1 except for a volume ratio between ethylene carbonate and methyl propionate.

Specifically, in Comparative example 1, (FSO₂)₂NLi was dissolved at a concentration of 1.2 mol/L in a mixed solvent in which ethylene carbonate and methyl propionate were mixed at a volume ratio of 30:70, to produce a mother liquor. Vinylene carbonate was added and dissolved in an amount equivalent to 1 mass% with respect to the mother liquor, to produce the electrolytic solution of Comparative example 1.

A lithium ion secondary battery of Comparative example 1 was the same as the lithium ion secondary battery of Example 1 except that the electrolytic solution of Comparative example 1 was used.

### (Comparative example 2)

An electrolytic solution of Comparative example 2 was the same as the electrolytic solution of Example 1 except for a volume ratio between ethylene carbonate and methyl propionate.

Specifically, in Comparative example 2, (FSO₂)₂NLi was dissolved at a concentration of 1.2 mol/L in a mixed solvent in which ethylene carbonate and methyl propionate were mixed at a volume ratio of 50:50, to produce a mother liquor. Vinylene carbonate was added and dissolved in an amount equivalent to 1 mass% with respect to the mother liquor, to produce the electrolytic solution of Comparative example 2.

A lithium ion secondary battery of Comparative example 2 was the same as the lithium ion secondary battery of Example 1 except that the electrolytic solution of Comparative example 2 was used.

### <Evaluation example 1 Rate characteristics evaluation>

The lithium ion secondary batteries of Examples 1, 2 and Comparative Examples 1, 2 were each discharged at four discharge rates of 0.4 C, 1.0 C, 2.0 C, and 4.0 to a voltage of 2.3 V from an SOC of 95%. Comparison in capacity, that is, rate capacity at a time when discharging of each lithium ion secondary battery ended, was performed for each discharge rate, to evaluate rate characteristics of the lithium ion secondary batteries of Examples 1, 2 and Comparative Examples 1, 2. The rate characteristics evaluation test was performed at n=2 at each of the C rates, and the average values were compared.

For each lithium ion secondary battery, a charge capacity obtained by CC-CV charging to 4.0 V at a rate of 0.4 C was set as the SOC of 100%. The rate capacity was represented by a percentage with respect to the above-described SOC of 100%.

Table 3 indicates the results.

**[Table 3]**

| | | Discharge capacity (mAh/g) | | | |
|---|---|---|---|---|---|
| | Amount of MP (volume%) | Discharge rate | | | |
| | | 0.4 C | 1.0 C | 2.0 C | 4.0 C |
| Example 1 | 85 | 140.6 | 131.9 | 80.8 | 48.6 |
| Example 2 | 75 | 140.1 | 123.4 | 75.3 | 45.4 |
| Comparative example 1 | 70 | 139.5 | 120.4 | 73.7 | 44.5 |
| Comparative example 2 | 50 | 139.8 | 99.8 | 61.4 | 37.6 |

| | | | | | |
|---|---|---|---|---|---|
| MP: methyl propionate | | | | | |

As indicated in Table 3, the lithium ion secondary batteries of Example 1 and Example 2 exhibited more excellent discharge characteristics, at all of the C rates of 0.4 C to 4.0 C, as compared with the lithium ion secondary batteries of Comparative example 1 and Comparative example 2. This is considered to be because the electrolytic solution of the lithium ion secondary battery of each of Example 1 and Example 2 contained 75 volume% or more of methyl propionate in the nonaqueous solvent.

The lithium ion secondary battery of Example 1 had a structure different from that of the lithium ion secondary battery of the present invention described above. However, needless to say, the effect exhibited by the electrolytic solution of Example 1 is similarly exhibited also by the lithium ion secondary battery of the present invention. The same also applies to the following examples.

### (Example 3)

An electrolytic solution and a lithium ion secondary battery of Example 3 will be described below.

### [Electrolytic solution]

(FSO₂)₂NLi was dissolved at a concentration of 1.2 mol/L in a mixed solvent in which ethylene carbonate and methyl propionate were mixed at a volume ratio of 15:85, to produce a mother liquor. 1,3,2-dioxathiolane-2,2-dioxide (hereinafter, may be abbreviated as DTD. DTD is one mode of cyclic sulfate ester) was added and dissolved in an amount equivalent to 0.5 mass% with respect to the mother liquor, to produce the electrolytic solution of Example 3.

### [Lithium ion secondary battery]

Graphite as a negative electrode active material, and carboxymethylcellulose and styrene butadiene rubber as a binding agent were mixed such that a mass ratio among the graphite, the carboxymethylcellulose, and the styrene butadiene rubber was 97:0.8:2.2, and water was added as a solvent, to produce a negative electrode active material layer forming composition in a slurry form. Copper foil was prepared as a current collector for a negative electrode. The negative electrode active material layer forming composition was applied to the surface of the copper foil into a film-like form, and the solvent was thereafter removed, to produce a negative electrode precursor. The produced negative electrode precursor was pressed in the thickness direction, to produce the negative electrode having the negative electrode active material layer formed on the surface of the copper foil.

The weight per area of the negative electrode was 6.7 mg/cm².

LiFePO₄ having an olivine structure and coated with carbon, acetylene black, and polyvinylidene fluoride were mixed as a positive electrode active material layer, a conductive additive, and a binding agent, respectively, such that a mass ratio among the positive electrode active material, the conductive additive, and the binding agent was 94:3:3, and N-methyl-2-pyrrolidone was added as a solvent, to produce a positive electrode active material layer forming composition in a slurry form. Aluminium foil was prepared as a current collector for a positive electrode. The positive electrode active material layer forming composition was applied to the surface of the aluminium foil into a film-like form, and the solvent was thereafter removed, to produce a positive electrode precursor. The produced positive electrode precursor was pressed in the thickness direction, to produce the positive electrode having the positive electrode active material layer formed on the surface of the aluminium foil.

The weight per area of the positive electrode was 13.9 mg/cm².

The above-described positive electrode and negative electrode were used to produce a lithium ion secondary battery of Example 3 in the same manner as in Example 1.

### (Example 4)

An electrolytic solution of Example 4 was the same as the electrolytic solution of Example 3 except that (FSO₂)₂NLi and LiPF₆ were used as lithium salt.

Specifically, in Example 4, (FSO₂)₂NLi and LiPF₆ were dissolved at a concentration of 0.6 mol/L and a concentration of 0.6 mol/L, respectively, in a mixed solvent in which ethylene carbonate and methyl propionate were mixed at a volume ratio of 15:85, to produce a mother liquor. DTD was added and dissolved in an amount equivalent to 0.5 mass% with respect to the mother liquor, to produce the electrolytic solution of Example 4.

A lithium ion secondary battery of Example 4 was the same as the lithium ion secondary battery of Example 3 except that the electrolytic solution of Example 4 was used.

### (Comparative example 3)

An electrolytic solution of Comparative example 3 was the same as the electrolytic solution of Example 3 except that (FSO₂)₂NLi and LiPF₆ were used as lithium salt.

Specifically, in Comparative example 3, LiPF₆ was dissolved at a concentration of 1.2 mol/L in a mixed solvent in which ethylene carbonate and methyl propionate were mixed at a volume ratio of 15:85, to produce a mother liquor. (FSO₂)₂NLi in an amount equivalent of 0.5 mass% with respect to the mother liquor and DTD in an amount equivalent to 0.5 mass% with respect to the mother liquor were added and dissolved, to produce the electrolytic solution of Comparative example 3. An amount of the (FSO₂)₂NLi in the electrolytic solution of Comparative example 3 was 0.03 mol/L, and the amount of the (FSO₂)₂NLi was 2.4 mol% with respect to the total of amounts of the (FSO₂)₂NLi and the LiPF₆.

A lithium ion secondary battery of Comparative example 3 was the same as the lithium ion secondary battery of Example 3 except that the electrolytic solution of Comparative example 3 was used.

### (Comparative example 4)

An electrolytic solution of Comparative example 3 was the same as the electrolytic solution of Example 3 except that LiPF₆ was merely used as lithium salt.

Specifically, in Comparative example 3, LiPF₆ was dissolved at a concentration of 1.2 mol/L in a mixed solvent in which ethylene carbonate and methyl propionate were mixed at a volume ratio of 15:85, to produce a mother liquor. DTD was added and dissolved in an amount equivalent to 0.5 mass% with respect to the mother liquor, to produce the electrolytic solution of Comparative example 4.

A lithium ion secondary battery of Comparative example 4 was the same as the lithium ion secondary battery of Example 3 except that the electrolytic solution of Comparative example 4 was used.

### <Evaluation example 2 High temperature charging/discharging cycle test>

A high temperature charging/discharging cycle test was performed for the lithium ion secondary batteries of Examples 3, 4 and Comparative Examples 3, 4.

### [Confirmation of output]

Firstly, a voltage change amount was measured when each lithium ion secondary battery in which the SOC was adjusted to 60% was discharged at a constant current rate under a condition of 25°C for 10 seconds. The measurement was performed under a plurality of conditions generated by changing the current rate. A constant current (mA) at which a time for discharging to a voltage of 2.5 V was 10 seconds was calculated for each lithium ion secondary battery having the SOC of 60% according to the obtained results. A value obtained by multiplying the voltage change amount in change from the SOC of 60% to 2.5 V, by the calculated constant current (mA), was set as an initial output. The test for the initial output was also performed a plurality of times.

A percentage of the output value of each lithium ion secondary battery to the output value of the lithium ion secondary battery of Comparative example 4 was calculated, and a value obtained by subtracting 100(%) from the percentage was set as an initial output increase rate (%).

### [High temperature charging/discharging cycle]

Thereafter, a high temperature charging/discharging cycle in which, at 60°C, CC-CV charging to 4 V was performed at a rate of 1 C and CC discharging to an SOD of 90% was performed at a rate of 1 C, was repeated 100 times. In the description herein, the charging means that lithium ions are moved from the negative electrode to the positive electrode, and a potential difference between the positive electrode and the negative electrode is increased.

After the end of the 100-th charging/discharging, an output of each lithium ion secondary battery was confirmed similarly to the above-described confirmation of output. A percentage of the output value of each lithium ion secondary battery to the output value of the lithium ion secondary battery of Comparative example 4 was calculated, and a value obtained by subtracting 100(%) from the percentage was set as an output increase rate (%) after the 100 cycles.

Table 4 indicates the initial output of each lithium ion secondary battery, and Table 5 indicates the output of each lithium ion secondary battery after the 100 cycles. The confirmation of output was performed at n=4 and the high temperature charging/discharging cycle was performed at n=2, and Table 4 and Table 5 indicate average values thereof.

**[Table 4]**

| | Lithium salt (mol%) | | Initial output (mW) | Initial output increase rate (%) |
|---|---|---|---|---|
| | LiFSI | LiPF₆ | | |
| Example 3 | 100 | 0 | 824.9 | 14.7 |
| Example 4 | 50 | 50 | 817.4 | 13.6 |
| Comparative example 3 | 2.4 | 97.6 | 768.7 | 6.9 |
| Comparative example 4 | 0 | 100 | 719.3 | null |

| | | | | |
|---|---|---|---|---|
| LiFSI: (FSO₂)₂NLi | | | | |

**[Table 5]**

| | Lithium salt (mol%) | | Output (mW) after 100 cycles | Output increase rate (%) after 100 cycles |
|---|---|---|---|---|
| | LiFSI | LiPF₆ | | |
| Example 3 | 100 | 0 | 594.3 | 6.3 |
| Example 4 | 50 | 50 | 605.4 | 8.3 |
| Comparative example 3 | 2.4 | 97.6 | 551.6 | -1.3 |
| Comparative example 4 | 0 | 100 | 558.8 | null |

| | | | | |
|---|---|---|---|---|
| LiFSI: (FSO₂)₂NLi | | | | |

As indicated in Table 4, the lithium ion secondary batteries of Comparative example 3, Example 3, and Example 4 in which (FSO₂)₂NLi was contained as lithium salt had more excellent initial output as compared with the lithium ion secondary battery of Comparative example 4 in which LiPF₆ was used alone as lithium salt. Particularly, in the lithium ion secondary batteries of Example 3 and Example 4 in which the content of (FSO₂)₂NLi was not less than 30 mol%, the initial output was significantly increased even as compared with the lithium ion secondary battery of Comparative example 3 in which the content of (FSO₂)₂NLi was less than 30 mol%.

Furthermore, as indicated in Table 5, in the charging/discharging cycle durability at a high temperature, the lithium ion secondary battery of Comparative example 3 was almost the same as the lithium ion secondary battery of Comparative example 4. Meanwhile, the lithium ion secondary batteries of Example 3 and Example 4 were more excellent also in charging/discharging cycle durability at a high temperature as compared with the lithium ion secondary batteries of Comparative example 3 and Comparative example 4.

These results support enhancement of durability of the lithium ion secondary battery, in particular, at a high temperature in the case of using the electrolytic solution in which (FSO₂)₂NLi, that is, lithium salt other than LiPF₆, was contained in an amount of not less than 30 mol% with respect to the entirety of lithium salt.

### <Evaluation example 3 Storage test>

CC-CV charging to 4.0 V was performed at a rate of 0.4 C for the lithium ion secondary batteries of Examples 3, 4 and Comparative Examples 3, 4, and a charge capacity at this time was set as a reference (SOC of 100%) . A storage test in which each lithium ion secondary battery at the SOC of 100 was stored at 40°C for 12 days, was performed.

Before and after the storage test, outputs were confirmed similarly to Evaluation example 2, and a percentage of the output value of each lithium ion secondary battery after the storage test to the output value of the lithium ion secondary battery of Comparative example 4 after the storage test was calculated, and a value obtained by subtracting 100(%) from the percentage was set as an output increase rate (%) after the storage.

Table 6 indicates the output obtained after each lithium ion secondary battery was stored after the 100 cycles. The test was performed at n=2, and Table 6 indicates the average values.

**[Table 6]**

| | Lithium salt (molt) | | Output (mW) after storage | Output increase rate (%) after storage |
|---|---|---|---|---|
| | LiFSI | LiPF₆ | | |
| Example 3 | 100 | 0 | 747.9 | 12.4 |
| Example 4 | 50 | 50 | 766.8 | 15.2 |
| Comparative example 3 | 2.4 | 97.6 | 736.6 | 10.7 |
| Comparative example 4 | 0 | 100 | 665.6 | null |

| | | | | |
|---|---|---|---|---|
| LiFSI: (FSO₂)₂NLi | | | | |

As indicated in Table 6, the lithium ion secondary batteries of Example 3 and Example 4 also had more excellent durability when stored at 40°C as compared with the lithium ion secondary batteries of Comparative example 3 and Comparative example 4. This result also supports enhancement of durability of the lithium ion secondary battery, in particular, at a high temperature in the case of using the electrolytic solution in which lithium salt other than LiPF₆ was contained in an amount of not less than 30 mol% with respect to the entirety of lithium salt.

### (Example 5)

A lithium ion secondary battery of Example 5 was produced as follows by using an electrolytic solution of Example 5 which was the same as the electrolytic solution of Example 3. For reference, (FSO₂)₂NLi was dissolved at a concentration of 1.2 mol/L in a mixed solvent in which ethylene carbonate and methyl propionate were mixed at a volume ratio of 15:85, to produce a mother liquor, and DTD was added and dissolved in an amount equivalent to 0.5 mass% with respect to the mother liquor, thereby producing the electrolytic solution of Example 5.

### [Lithium ion secondary battery]

Graphite as a negative electrode active material, and carboxymethylcellulose and styrene butadiene rubber as a binding agent were mixed such that a mass ratio among the graphite, the carboxymethylcellulose, and the styrene butadiene rubber was 97:0.8:2.2, and water was added as a solvent, to produce a negative electrode active material layer forming composition in a slurry form. Copper foil was prepared as a current collector for a negative electrode. The negative electrode active material layer forming composition was applied to the surface of the copper foil into a film-like form, and the solvent was thereafter removed, to produce a negative electrode precursor. The produced negative electrode precursor was pressed in the thickness direction, to produce the negative electrode having the negative electrode active material layer formed on the surface of the copper foil.

The weight per area of the negative electrode was 6.24 mg/cm².

LiFePO₄ having an olivine structure and coated with carbon, acetylene black, and polyvinylidene fluoride were mixed as a positive electrode active material layer, a conductive additive, and a binding agent, respectively, such that a mass ratio among the positive electrode active material, the conductive additive, and the binding agent was 90:5:5, and N-methyl-2-pyrrolidone was added as a solvent, to produce a positive electrode active material layer forming composition in a slurry form. Aluminium foil was prepared as a current collector for a positive electrode. The positive electrode active material layer forming composition was applied to the surface of the aluminium foil into a film-like form, and the solvent was thereafter removed, to produce a positive electrode precursor. The produced positive electrode precursor was pressed in the thickness direction, to produce the positive electrode having the positive electrode active material layer formed on the surface of the aluminium foil.

The weight per area of the positive electrode was 13.87 mg/cm².

The above-described positive electrode and negative electrode were used to produce a lithium ion secondary battery of Example 5 in the same manner as in Example 1.

### (Comparative example 5)

A lithium ion secondary battery of Comparative example 5 was produced in the same manner as in Example 5 by using an electrolytic solution of Comparative example 5 which was the same as the electrolytic solution of Comparative example 4. For reference, LiPF₆ was dissolved at a concentration of 1.2 mol/L in a mixed solvent in which ethylene carbonate and methyl propionate were mixed at a volume ratio of 15:85, to produce a mother liquor, and DTD was added and dissolved in an amount equivalent to 0.5 mass% with respect to the mother liquor, thereby producing the electrolytic solution of Comparative example 5.

### <Evaluation example 4 Gas generation evaluation>

The lithium ion secondary batteries of Example 5 and Comparative example 5 were charged to 4.0 V at 0.05 C and maintained at 60°C for 20 hours, and were thus activated. Before and after the activation, volumes of each lithium ion secondary battery were measured by the Archimedes method, and an amount (µL) of gas generated by the activation was calculated from the change between volumes of each lithium ion secondary battery before and after the activation.

Table 7 indicates an amount of generated gas in each lithium ion secondary battery. The test was performed at n=3, and Table 7 indicates the average values.

**[Table 7]**

| | Lithium salt (molt) | | Amount of generated gas (µL) |
|---|---|---|---|
| | LiFSI | LiPF₆ | |
| Example 5 | 100 | 0 | 28 |
| Comparative example 5 | 0 | 100 | 63 |

| | | | |
|---|---|---|---|
| LiFSI: (FSO₂)₂NLi | | | |

As indicated in Table 7, an amount of generated gas in the lithium ion secondary battery of Example 5 was less than an amount of generated gas in the lithium ion secondary battery of Comparative example 5. This result indicates that gas generated according to charging/discharging of the lithium ion secondary battery was reduced by using the electrolytic solution in which lithium salt other than LiPF₆ was contained in an amount of not less than 30 mol% with respect to the entirety of lithium salt.

In the lithium ion secondary battery in which graphite is used as the negative electrode, gas is considered to be generated by degradation of the electrolytic solution in the negative electrode. In the lithium ion secondary battery of Example 5, a preferable coating was considered to be formed on the surface of the negative electrode through degradation of (FSO₂)₂NLi contained in the electrolytic solution, and degradation of the electrolytic solution was assumed to be inhibited by the coating. By inhibiting generation of gas, expansion of the lithium ion secondary battery caused by charging/discharging was reduced, stress acting on the lithium ion secondary battery was reduced, and durability of the lithium ion secondary battery was consequently enhanced. This effect of inhibiting generation of gas is particularly advantageous for a lithium ion secondary battery in which a metal can is not used as a container, and is very advantageous also for the lithium ion secondary battery of the present invention.

### (Example 6)

A lithium ion secondary battery of Example 6 was produced in the same manner as in Example 3 by using an electrolytic solution of Example 6 which was the same as the electrolytic solution of Example 3. For reference, (FSO₂)₂NLi was dissolved at a concentration of 1.2 mol/L in a mixed solvent in which ethylene carbonate and methyl propionate were mixed at a volume ratio of 15:85, to produce a mother liquor, and DTD was added and dissolved in an amount equivalent to 0.5 mass% with respect to the mother liquor, thereby producing the electrolytic solution of Example 6.

### (Example 7)

A lithium ion secondary battery of Example 7 was produced in the same manner as in Example 3 by using an electrolytic solution of Example 7 which was the same as the electrolytic solution of Example 4. For reference, (FSO₂)₂NLi and LiPF₆ were dissolved at a concentration of 0.6 mol/L and a concentration of 0.6 mol/L, respectively, in a mixed solvent in which ethylene carbonate and methyl propionate were mixed at a volume ratio of 15:85, to produce a mother liquor, and DTD was added and dissolved in an amount equivalent to 0.5 mass% with respect to the mother liquor, thereby producing the electrolytic solution of Example 7.

### (Comparative example 6)

A lithium ion secondary battery of Comparative example 6 was produced in the same manner as in Example 3 by using an electrolytic solution of Comparative example 6 which was the same as the electrolytic solution of Comparative example 3. For reference, LiPF₆ was dissolved at a concentration of 1.2 mol/L in a mixed solvent in which ethylene carbonate and methyl propionate were mixed at a volume ratio of 15:85, to produce a mother liquor, and (FSO₂)₂NLi in an amount equivalent to 0.5 mass% with respect to the mother liquor and DTD in an amount equivalent to 0.5 mass% with respect to the mother liquor were added and dissolved, thereby producing the electrolytic solution of Comparative example 6. The amount of the (FSO₂)₂NLi in the electrolytic solution of Comparative example 6 was 0.03 mol/L, and the amount of the (FSO₂)₂NLi was 2.4 mol% with respect to the total of amounts of the (FSO₂)₂NLi and the LiPF₆.

### (Comparative example 7)

A lithium ion secondary battery of Comparative example 7 was produced in the same manner as in Example 3 by using an electrolytic solution of Comparative example 7 which was the same as the electrolytic solution of Comparative example 4. For reference, LiPF₆ was dissolved at a concentration of 1.2 mol/L in a mixed solvent in which ethylene carbonate and methyl propionate were mixed at a volume ratio of 15:85, to produce a mother liquor, and DTD was added and dissolved in an amount equivalent to 0.5 mass% with respect to the mother liquor, thereby producing the electrolytic solution of Comparative example 7.

### <Evaluation example 5 High temperature charging/discharging cycle test>

CC-CV charging to 4.0 V was performed at a rate of 0.4 C for the lithium ion secondary batteries of Example 6, Example 7, Comparative example 6, and Comparative example 5. Thereafter, CC-CV discharging to 2.5 V was performed at a rate of 1 C in two hours. A discharge capacity at this time was set as an initial capacity. For each lithium ion secondary battery, a high temperature charging/discharging cycle test which was the same as in Evaluation example 2 was performed. Furthermore, discharge capacities of each lithium ion secondary battery were confirmed after the 50-th charging/discharging ended and after the 100-th charging/discharging ended. The discharge capacity was confirmed in the same manner as for the above-described initial capacity. A percentage of the discharge capacity after the end of the 50-th charging/discharging to the initial capacity, and a percentage of the discharge capacity after the end of the 100-th charging/discharging to the initial capacity were calculated, and were set as a capacity retention rate after the 50 cycles and a capacity retention rate after the 100 cycles, respectively.

Table 8 indicates the capacity retention rate of each lithium ion secondary battery after the 50 cycles and the capacity retention rate of each lithium ion secondary battery after the 100 cycles. Each test was performed at n=2, and Table 8 indicates the average values.

**[Table 8]**

| | Lithium salt (mol%) | | Capacity retention rate (%) after 50 cycles | Capacity retention rate (%) after 100 cycles |
|---|---|---|---|---|
| | LiFSI | LiPF₆ | | |
| Example 6 | 100 | 0 | 92.1 | 89.5 |
| Example 7 | 50 | 50 | 90.2 | 86.1 |
| Comparative example 6 | 2.4 | 97.6 | 84.8 | 76.7 |
| Comparative example 7 | 0 | 100 | 85.7 | 77.6 |

| | | | | |
|---|---|---|---|---|
| LiFSI: (FSO₂)₂NLi | | | | |

As indicated in Table 8, the lithium ion secondary batteries of Example 6 and Example 7 each had a more excellent capacity retention rate as compared with the lithium ion secondary batteries of Comparative example 6 and Comparative example 7. This result also supports enhancement of durability of the lithium ion secondary battery, in particular, at a high temperature in the case of using the electrolytic solution in which lithium salt other than LiPF₆ was contained in an amount of not less than 30 mol% with respect to the entirety of lithium salt.

### <Evaluation example 6 Storage test>

For the lithium ion secondary batteries of Examples 6, 7 and Comparative Examples 6, 7, a storage test was performed in the same manner as in Evaluation example 3.

The discharge capacity of each lithium ion secondary battery was confirmed in the same manner as in Evaluation example 2, before the storage test, after 7 days elapsed from the start of the storage test, and after 12 days elapsed from the start of the storage test. The discharge capacity before the storage test was set as an initial capacity. A percentage of the discharge capacity after elapse of 7 days from the start of the storage test to the initial capacity, and a percentage of the discharge capacity after elapse of 12 days from the start of the storage test to the initial capacity were calculated, and were set as a capacity retention rate after elapse of 7 days after the start of the storage test and a capacity retention rate after elapse of 12 days from the start of the storage test, respectively.

Table 9 indicates the capacity retention rate of each lithium ion secondary battery after elapse of 7 days from the start of the storage test and the capacity retention rate of each lithium ion secondary battery after elapse of 12 days from the start of the storage test. Each test was performed at n=2, and Table 9 indicates the average values.

**[Table 9]**

| | Lithium salt (mol%) | | Capacity retention rate (%) after elapse of 7 days from start of storage test | Capacity retention rate (%) after elapse of 12 days from start of storage test |
|---|---|---|---|---|
| | LiFSI | LiPF₆ | | |
| Example 6 | 100 | 0 | 95.9 | 94.3 |
| Example 7 | 50 | 50 | 96.4 | 94.6 |
| Comparative example 6 | 2.4 | 97.6 | 95.7 | 93.4 |
| Comparative example 7 | 0 | 100 | 94.6 | 92 |

| | | | | |
|---|---|---|---|---|
| LiFSI: (FSO₂)₂NLi | | | | |

As indicated in Table 9, the lithium ion secondary batteries of Example 6 and Example 7 each had a more excellent capacity retention rate as compared with the lithium ion secondary batteries of Comparative example 6 and Comparative example 7, and the greater the number of days that elapsed after the start of the storage test was, the more significant the difference in capacity retention rate was.

This result also supports enhancement of durability of the lithium ion secondary battery, in particular, at a high temperature in the case of using the electrolytic solution in which lithium salt other than LiPF₆ was contained in an amount of not less than 30 mol% with respect to the entirety of lithium salt.

### (Example 8)

(FSO₂)₂NLi was dissolved at a concentration of 1.2 mol/L in a mixed solvent in which ethylene carbonate and methyl propionate were mixed at a volume ratio of 15:85, to produce a mother liquor. Vinylene carbonate was added and dissolved in an amount equivalent to 1.94 mass% with respect to the mother liquor, to produce an electrolytic solution of Example 8.

A lithium ion secondary battery of Example 8 was produced in the same manner as in Example 1 by using the electrolytic solution of Example 8.

### (Comparative example 8)

(FSO₂)₂NLi was dissolved at a concentration of 1.2 mol/L in a mixed solvent in which ethylene carbonate and dimethyl carbonate were mixed at a volume ratio of 15:85, to produce a mother liquor. Vinylene carbonate was added and dissolved in an amount equivalent to 1.94 mass% with respect to the mother liquor, to produce an electrolytic solution of Comparative example 8.

A lithium ion secondary battery of Comparative Example 8 was produced in the same manner as in Example 1 by using the electrolytic solution of Comparative example 8.

### (Comparative example 9)

(FSO₂)₂NLi was dissolved at a concentration of 1.2 mol/L in a mixed solvent in which ethylene carbonate, dimethyl carbonate, and ethyl methyl carbonate were mixed at a volume ratio of 15:65:20, to produce a mother liquor. Vinylene carbonate was added and dissolved in an amount equivalent to 1.94 mass% with respect to the mother liquor, to produce an electrolytic solution of Comparative example 9.

A lithium ion secondary battery of Comparative example 9 was produced in the same manner as in Example 1 by using the electrolytic solution of Comparative example 9.

### (Comparative example 10)

(FSO₂)₂NLi was dissolved at a concentration of 1.2 mol/L in a mixed solvent in which ethylene carbonate, dimethyl carbonate, and ethyl methyl carbonate were mixed at a volume ratio of 15:45:40, to produce a mother liquor. Vinylene carbonate was added and dissolved in an amount equivalent to 1.94 mass% with respect to the mother liquor, to produce an electrolytic solution of Comparative example 10.

A lithium ion secondary battery of Comparative example 10 was produced in the same manner as in Example 1 by using the electrolytic solution of Comparative example 10.

### (Comparative example 11)

LiPF₆ was dissolved at a concentration of 1.2 mol/L in a mixed solvent in which ethylene carbonate and methyl propionate were mixed at a volume ratio of 15:85, to produce a mother liquor. Vinylene carbonate in an amount equivalent to 1 mass% with respect to the mother liquor and LiDFOB in an amount equivalent to 1 mass% with respect to the mother liquor were added and dissolved, to produce an electrolytic solution of Comparative example 11.

A lithium ion secondary battery of Comparative Example 8 was produced in the same manner as in Example 1 by using the electrolytic solution of Comparative example 11.

### <Evaluation example 7 Long time discharge test 1>

For the lithium ion secondary batteries of Example 8 and Comparative example 11, CC discharging from the SOC of 95% to a voltage of 2.2 V was performed at a discharge rate of 1.1 C, and change of the discharge capacity with elapse of time was measured.

Aside from this, for each lithium ion secondary battery, CC-CV discharging from the SOC of 100% to 3.0 V was performed at a discharge rate of 0.33 C, and the capacity at this time was set as a CC-CV capacity. For each lithium ion secondary battery, a percentage of a capacity at the time when the CC discharging ended to the above-described CC-CV capacity was calculated as a rate %. The test was performed at n=2, and an average value was used as the capacity at the time when the CC discharging ended.

For each lithium ion secondary battery, a charge capacity at the time when CC-CV charging to 3.75 V was performed at a rate of 0.2 C was set as an SOC of 100%.

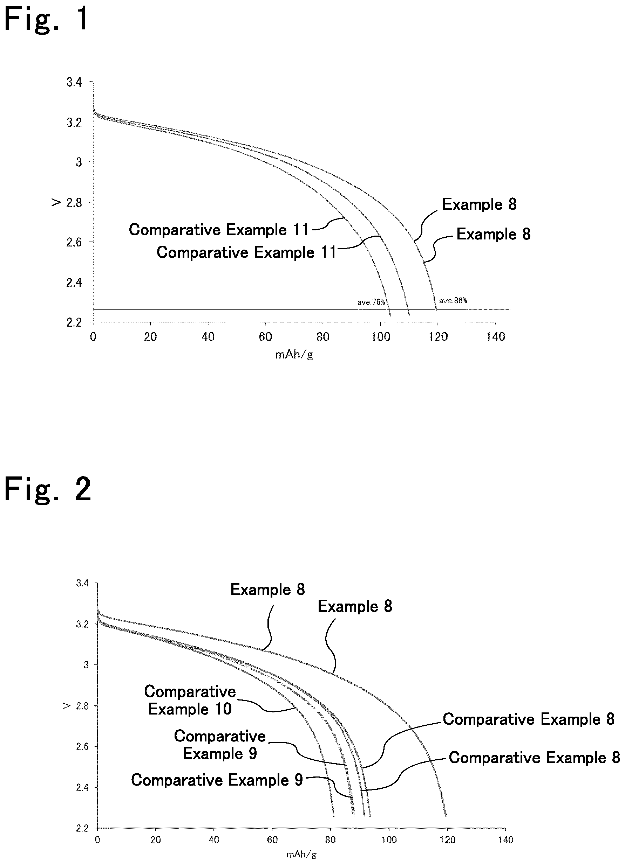

Fig. 1 shows a graph representing change of the CC discharge capacity with elapse of time in the lithium ion secondary battery of each of Example 8 and Comparative example 11. Furthermore, Table 10 indicates a rate % of each of the lithium ion secondary batteries of Example 8 and Comparative example 11.

**[Table 10]**

| | Lithium salt (mol/L) | | Nonaqueous solvent (volume%) | | Rate % |
|---|---|---|---|---|---|
| | LiFSI | LiPF₆ | EC | MP | |
| Example 8 | 1.2 | 0 | 15 | 85 | 86 |
| Comparative example 11 | 0 | 1.2 | 15 | 85 | 76 |

| | | | | | |
|---|---|---|---|---|---|
| LiFSI: (FSO₂)₂NLi, EC: ethylene carbonate, MP: methyl propionate | | | | | |

As shown in Fig. 1, the lithium ion secondary battery of Example 8 was considered to have a substantially high capacity at the end of discharging and excellent long time discharge characteristics as compared with the ion secondary battery of Comparative example 11.

As indicated in Table 10, the lithium ion secondary battery of Example 8 also had a substantially excellent rate % at the end of discharging as compared with the lithium ion secondary battery of Comparative example 11. These results indicate that use of (FSO₂)₂NLi as lithium salt contributed to improvement of long time discharge characteristics. This result is considered to indicate that, as described also in Basic examination 1, in a case where an amount of (FSO₂)₂NLi with respect to the total amount of lithium salt was not less than 30 mol%, viscosity of the electrolytic solution was reduced, and ionic conductivity was enhanced.

### <Evaluation example 8 Long time discharge test 2>

For the lithium ion secondary batteries of Example 8 and Comparative examples 8 to 10, change of the discharge capacity with elapse of time was measured in the same manner as in Evaluation example 7.

Fig. 2 shows a graph representing change of the CC discharge capacity with elapse of time in the lithium ion secondary battery of each of Example 8 and Comparative examples 8 to 10. Table 11 indicates a rate % of each of the lithium ion secondary batteries of Example 8 and Comparative examples 8 to 10.

**[Table 11]**

| | Lithium salt | Nonaqueous solvent (volume%) | | | | Rate % |
|---|---|---|---|---|---|---|
| | LiFSI (mol/L) | EC | MP | DMC | EMC | |
| Example 8 | 1.2 | 15 | 85 | 0 | 0 | 86 |
| Comparative example 8 | 1.2 | 15 | 0 | 85 | 0 | 66 |
| Comparative example 9 | 1.2 | 15 | 0 | 65 | 20 | 63 |
| Comparative example 10 | 1.2 | 15 | 0 | 45 | 40 | 59 |

| | | | | | | |
|---|---|---|---|---|---|---|
| LiFSI: (FSO₂)₂NLi, EC: ethylene carbonate, MP: methyl propionate DMC: dimethyl carbonate, EMC: ethyl methyl carbonate | | | | | | |

As shown in Fig. 2, the lithium ion secondary battery of Example 8 was considered to have a substantially high capacity at the end of discharging and excellent long time discharge characteristics as compared with each of the lithium ion secondary batteries of Comparative examples 8 to 10.

As indicated in Table 11, the lithium ion secondary battery of Example 8 also had a substantially excellent rate % at the end of discharging as compared with each of the lithium ion secondary batteries of Comparative examples 8 to 10. This result also clearly indicates that the lithium ion secondary battery of Example 8 had excellent long time discharge characteristics.

The lithium ion secondary battery of Example 8 was considered to have excellent long time discharge characteristics as compared with the lithium ion secondary batteries of Comparative examples 8 to 10 because of a composition of the nonaqueous electrolytic solution. According to this result, usefulness in the case of methyl propionate being used for the nonaqueous electrolytic solution became more clear. Furthermore, according to the results of Evaluation example 7 and Evaluation example 8, in a case where (FSO₂)₂NLi as lithium salt and methyl propionate as the nonaqueous solvent were used in combination, the electrolytic solution contributing to improvement of battery characteristics of the lithium ion secondary battery was considered to be obtained.

### (Example 9)

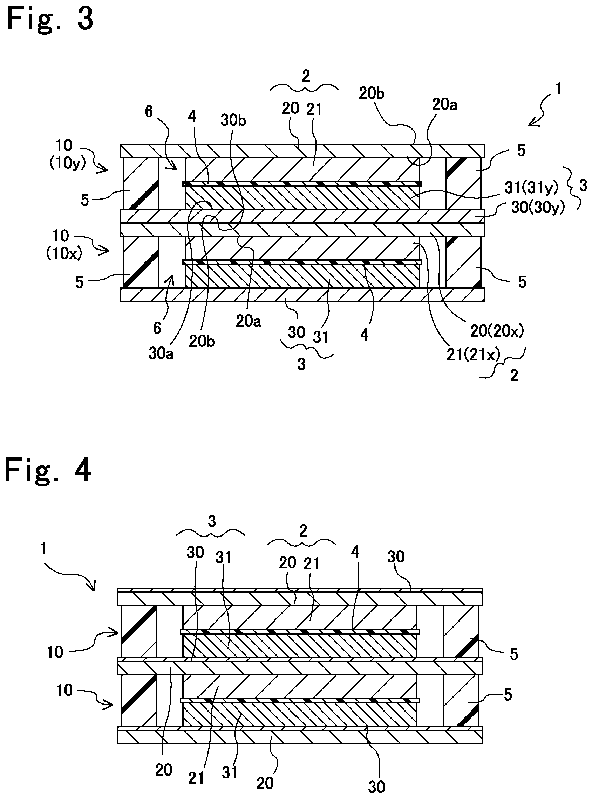

A lithium ion secondary battery of Example 9 is the lithium ion secondary battery of the present invention. Fig. 3 is a diagram schematically illustrating the lithium ion secondary battery of Example 9. The lithium ion secondary battery of Example 9 will be described below with reference to Fig. 3.

As shown in Fig. 3, a lithium ion secondary battery 1 of Example 9 is obtained by stacking two power storage cells 10. Each power storage cell 10 has a positive electrode 2, a negative electrode 3, a separator 4, a sealing portion 5, and an electrolytic solution 6.

The positive electrode 2 has a first current collector 20 and a positive electrode active material layer 21. The first current collector 20 is implemented by aluminium foil, and has one surface 20a and the other surface 20b. The one surface 20a and the other surface 20b oppose each other in a back-to-back relationship.

The positive electrode active material layer 21 is the same as the positive electrode active material layer of the lithium ion secondary battery of Example 1, and is stacked and formed at the center portion of the one surface 20a of the first current collector 20.

The negative electrode 3 has a second current collector 30 and a negative electrode active material layer 31. The second current collector 30 is implemented by copper foil, and has one surface 30a and the other surface 30b. The one surface 30a and the other surface 30b oppose each other in a back-to-back relationship.

The negative electrode active material layer 31 is the same as the negative electrode active material layer of the lithium ion secondary battery of Example 1, and is stacked and formed at the center portion of the one surface 30a of the second current collector 30.

The negative electrode 3 is stacked with the positive electrode 2 in a state where the negative electrode active material layer 31 opposes the positive electrode active material layer 21, and the separator 4 is held between the negative electrode active material layer 31 and the positive electrode active material layer 21. In other words, a laminated body formed of the negative electrode active material layer 31, the separator 4, and the positive electrode active material layer 21 is formed between the first current collector 20 and the second current collector 30 that constitute the same power storage cell 10, in the above-described opposing direction. The separator 4 is the same as the separator of the lithium ion secondary battery of Example 1.

A material of the sealing portion 5 is an acid-modified olefin, and the sealing portion 5 has a substantially tubular shape having a short length. The sealing portion 5 surrounds the periphery of the laminated body formed of the negative electrode active material layer 31, the separator 4, and the positive electrode active material layer 21, between the first current collector 20 and the second current collector 30, over the entire periphery in the peripheral direction of the laminated body. The surface of the sealing portion 5 on the first current collector 20 side is heat-sealed to the first current collector 20, and the surface on the second current collector 30 side is heat-sealed to the second current collector 30. Thus, the sealing portion 5 seals a portion between the first current collector 20 and the second current collector 30 in a liquid-tight state. The sealing portion 5 also functions as a spacer for maintaining a space between the first current collector 20 and the second current collector 30, and blocking direct electrical connection therebetween.

The electrolytic solution 6 is sealed in a space demarcated and formed by the sealing portion 5, the first current collector 20, and the second current collector 30. The electrolytic solution 6 is the same as the electrolytic solution of Example 1.

The lithium ion secondary battery 1 of Example 9 has the two power storage cells 10 connected in series. A first current collector 20x of one power storage cell 10x and a second current collector 30y of a power storage cell 10y adjacent to the first current collector 20x are stacked with each other and electrically connected directly to each other. Therefore, the first current collector 20x and the second current collector 30y are regarded as one current collector forming a two-tiered structure. The current collector is regarded as a bipolar electrode having a positive electrode active material layer 21x and a negative electrode active material layer 31y disposed on both the respective surfaces.

A method for producing the lithium ion secondary battery 1 of Example 9 will be described below.

Firstly, the positive electrode 2 and the negative electrode 3 are produced in the method described for Example 1.

Subsequently, the sealing portion 5 is integrated with one of the positive electrode 2 and the negative electrode 3. Specifically, the sealing portion 5 is heat-sealed to one of the first current collector 20 and the second current collector 30 by using an impulse sealing machine. Thus, the sealing portion 5 is integrated with the first current collector 20 or the second current collector 30 so as to form a box-like shape, thereby allowing the electrolytic solution 6 to be stored thereinside.

Subsequently, the electrolytic solution 6 is injected into the sealing portion 5, and the sealing portion 5 in this state is integrated with the other of the positive electrode 2 and the negative electrode 3. Specifically, the positive electrode active material layer 21, the negative electrode active material layer 31, the separator 4, and the sealing portion 5 are stacked such that the positive electrode active material layer 21 and the negative electrode active material layer 31 oppose each other and hold the separator 4 and the sealing portion 5 therebetween. The sealing portion 5 is heat-sealed to the other of the first current collector 20 and the second current collector 30 by using an impulse sealing machine. Thus, the power storage cell 10 of the lithium ion secondary battery 1 of Example 9 is obtained.

The two power storage cells 10 are prepared. The first current collector 20x of the first power storage cell 10x which is one of the power storage cells 10 and the second current collector 30y of the second power storage cell 10y which is the other of the power storage cells 10 are overlaid on each other in the opposing direction, to stack the first current collector 20x and the second current collector 30y. The two power storage cells 10 having been stacked with each other are bound by a not-illustrated binding member, and a predetermined binding load is applied to each power storage cell 10 in the opposing direction. Thus, the first power storage cell 10x and the second power storage cell 10y are maintained in a state of being stacked with each other. Furthermore, not-illustrated terminals are fixed to the power storage cells 10x, 10y. Thus, the lithium ion secondary battery of Example 9 was obtained.

In the lithium ion secondary battery 1 of Example 9, the sealing portion 5 is fixed to the first current collector 20 and the second current collector 30. Therefore, each power storage cell 10 stably holds the electrolytic solution 6 thereinside.

### (Example 10)

A lithium ion secondary battery of Example 10 is the lithium ion secondary battery of the present invention, and is almost the same as the lithium ion secondary battery of Example 9 except for structures of the first current collector and the second current collector. Fig. 4 is a diagram schematically illustrating the lithium ion secondary battery of Example 10. The lithium ion secondary battery of Example 10 will be described below with reference to Fig. 4.

As shown in Fig. 4, the first current collector 20 of the positive electrode 2 and the second current collector 30 of the negative electrode 3 are integrated with each other in the lithium ion secondary battery of Example 10. Specifically, the first current collector 20 is implemented by aluminium foil, and the second current collector 30 is a copper plating layer formed on the first current collector 20.

The lithium ion secondary battery of Example 10 also has excellent durability similarly to the lithium ion secondary battery of Example 9.

### (Example 11)

(FSO₂)₂NLi was dissolved at a concentration of 1.2 mol/L in a mixed solvent in which ethylene carbonate and methyl propionate were mixed at a volume ratio of 30:70, to produce an electrolytic solution of Example 11.

### (Example 12)

(FSO₂)₂NLi and LiPF₆ were dissolved at a concentration of 1 mol/L and a concentration of 0.2 mol/L, respectively, in a mixed solvent in which ethylene carbonate and methyl propionate were mixed at a volume ratio of 30:70, to produce an electrolytic solution of Example 12. In the electrolytic solution of Example 12, an amount of the (FSO₂)₂NLi with respect to the total amount of lithium salt was about 83.3 mol%.

### (Example 13)

(FSO₂)₂NLi and LiPF₆ were dissolved at a concentration of 0.8 mol/L and a concentration of 0.4 mol/L, respectively, in a mixed solvent in which ethylene carbonate and methyl propionate were mixed at a volume ratio of 30:70, to produce an electrolytic solution of Example 12. In the electrolytic solution of Example 13, an amount of the (FSO₂)₂NLi with respect to the total amount of lithium salt was about 66.7 mol%.

### (Example 14)

(FSO₂)₂NLi and LiPF₆ were dissolved at a concentration of 0.6 mol/L and a concentration of 0.6 mol/L, respectively, in a mixed solvent in which ethylene carbonate and methyl propionate were mixed at a volume ratio of 30:70, to produce an electrolytic solution of Example 14. In the electrolytic solution of Example 14, an amount of the (FSO₂)₂NLi with respect to the total amount of lithium salt was about 50 mol%.

### (Example 15)

(FSO₂)₂NLi and LiPF₆ were dissolved at a concentration of 0.4 mol/L and a concentration of 0.8 mol/L, respectively, in a mixed solvent in which ethylene carbonate and methyl propionate were mixed at a volume ratio of 30:70, to produce an electrolytic solution of Example 15. In the electrolytic solution of Example 15, an amount of the (FSO₂)₂NLi with respect to the total amount of lithium salt was about 33.3 mol%.

### (Comparative example 12)

(FSO₂)₂NLi and LiPF₆ were dissolved at a concentration of 0.2 mol/L and a concentration of 1 mol/L, respectively, in a mixed solvent in which ethylene carbonate and methyl propionate were mixed at a volume ratio of 30:70, to produce an electrolytic solution of Comparative example 12. In the electrolytic solution of Comparative example 12, an amount of the (FSO₂)₂NLi with respect to the total amount of lithium salt was about 16.7 mol%.

### (Comparative example 13)

LiPF₆ was dissolved at a concentration of 1.2 mol/L in a mixed solvent in which ethylene carbonate and methyl propionate were mixed at a volume ratio of 30:70, to produce an electrolytic solution of Comparative example 13.

### <Evaluation example 9 Peeling evaluation>

A test piece was prepared by heat-sealing aluminium foil and copper foil by a sealing member. The test piece was immersed in the electrolytic solution of each of Examples 11 to 15 and Comparative examples 12, 13, and peeling evaluation was made.

Specifically, each test piece had dimensions of 15 mm×65 mm and a seal width of 18 mm. The sealing member was an acid-modified olefin-based sealing member, and more specifically contains polyethylene resin having a low melting point. For the heat-sealing, an impulse sealer was used, and a heating temperature was 110°C.

An aluminium laminate film was formed into a 60 mm×100 mm bag-like shape, 1 mL of the electrolytic solution was injected into the bag-shaped aluminium laminate film, and the test piece was immersed therein. The opening of the bag was heat-sealed by using an impulse sealer, whereby the test piece and the electrolytic solution were sealed in the bag. The obtained product was stored at 60°C for 72 hours. Thereafter, the test piece was taken out from the bag and washed with ethanol, and a naturally peeled length in the test piece was measured. For the measurement, a groove micrometer was used.

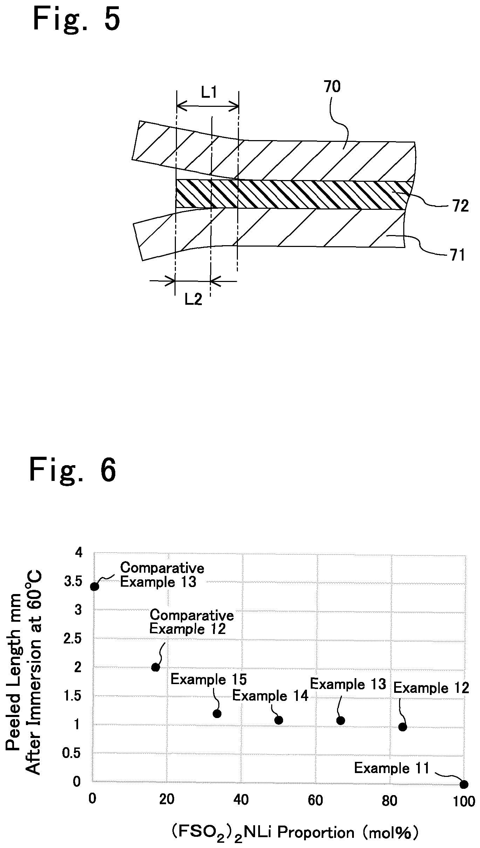

As shown in Fig. 5, a length from a start point of peeling between resin 72 and aluminium foil 70 to the end portion of the resin 72 was defined as a naturally peeled length L1 on an interface between the aluminium foil 70 and the resin 72. Similarly, a length from the start point of peeling between the resin 72 and copper foil 71 to the end portion of the resin 72 was defined as a naturally peeled length L2 on an interface between the copper foil 71 and the resin 72. L1 and L2 were each measured at a plurality of portions, and each average value was calculated as a naturally peeled length of the test piece due to each of the electrolytic solutions. Fig. 6 shows the results.

As shown in Fig. 6, in a case where the electrolytic solution of each of Examples 11 to 15 and Comparative example 12 containing lithium salt other than LiPF₆, was used, the naturally peeled length of the test piece was shorter as compared with a case where the electrolytic solution of Comparative example 13 containing only LiPF₆ as lithium salt was used. Furthermore, the naturally peeled lengths of the test pieces in the case of the electrolytic solutions of Examples 12 to 15 being used, indicated almost the same values.

As described above, LiPF₆ reacts with water to generate hydrogen fluoride. Therefore, in the test piece for which the electrolytic solution of Comparative example 13 was used, the aluminium foil deteriorated due to the hydrogen fluoride, and peeling was considered to consequently progress on the interface between the resin and the aluminium foil. The peeling was considered to be sufficiently inhibited in a case where the electrolytic solution which contained lithium salt other than LiPF₆ in an amount of not less than 30 mol% with respect to the total amount of lithium salt as in Examples 11 to 15, was used. Since the naturally peeled lengths of the test pieces for which the electrolytic solutions of Examples 12 to 15 were used indicated almost the same values, in a case where an amount of lithium salt other than LiPF₆ in the electrolytic solution is not less than 30 mol% with respect to the total amount of lithium salt, the amount of lithium salt other than LiPF₆ is considered to be sufficient from the viewpoint of inhibiting the peeling.

In a case where an electrolytic solution containing a large amount of LiPF₆ as in Comparative examples 12, 13 is used as the electrolytic solution of the lithium ion secondary battery of the present invention, peeling is assumed to similarly occur on an interface between the first current collector and the sealing portion.

Meanwhile, in a case where the electrolytic solution in which lithium salt other than LiPF₆ is contained in an amount of not less than 30 mol% with respect to the total amount of lithium salt as in Examples 11 to 15 is used as the electrolytic solution of the lithium ion secondary battery of the present invention, peeling is considered to be sufficiently inhibited on the interface between the first current collector and the sealing portion.

## Claims

1. A lithium ion secondary battery comprising:
a positive electrode having a first current collector, and a positive electrode active material layer disposed on one surface of the first current collector;
a negative electrode having a second current collector, and a negative electrode active material layer disposed on one surface of the second current collector, the negative electrode being stacked with the positive electrode such that the negative electrode active material layer opposes the positive electrode active material layer;
a separator disposed between the positive electrode active material layer and the negative electrode active material layer; and
a sealing portion disposed between the first current collector and the second current collector, the sealing portion surrounding peripheries of the positive electrode active material layer and the negative electrode active material layer, and sealing an electrolytic solution in a space between the first current collector and the second current collector, wherein
the electrolytic solution used for the lithium ion secondary battery has
an electrolyte containing lithium salt, and
a nonaqueous solvent containing cyclic alkylene carbonate and methyl propionate,
in the electrolytic solution, the electrolyte contains lithium salt other than LiPF₆ in an amount of not less than 30 mol% with respect to a total amount of the lithium salt, and
the nonaqueous solvent contains 75 volume% or more of the methyl propionate.

2. An electrolytic solution comprising:
an electrolyte containing lithium salt; and
a nonaqueous solvent containing cyclic alkylene carbonate and methyl propionate, wherein
the electrolyte contains lithium salt other than LiPF₆ in an amount of not less than 30 mol% with respect to a total amount of the lithium salt, and
the nonaqueous solvent contains 75 volume% or more of the methyl propionate.

3. The electrolytic solution according to claim 2, wherein the lithium salt other than LiPF₆ is (CF₃SO₂)₂NLi, (FSO₂)₂NLi, (C₂F₅SO₂)₂NLi, FSO₂(CF₃SO₂)NLi, (SO₂CF₂CF₂SO₂)NLi, or (SO₂CF₂CF₂CF₂SO₂)NLi.

4. The electrolytic solution according to claim 2 or claim 3, wherein the nonaqueous solvent contains 80 volume% or more of the methyl propionate.

5. The electrolytic solution according to any one of claim 2 to claim 4, wherein the electrolyte contains the lithium salt other than LiPF₆ in an amount of not less than 50 mol% with respect to the total amount of the lithium salt.

6. The lithium ion secondary battery according to claim 1, wherein the negative electrode contains graphite in the negative electrode active material layer.
